# FASCICULE DE BREVET EUROPEEN

(11) **EP 2 139 666 B1**
(45) Date de publication et mention de la délivrance du brevet: **21.09.2011**
(21) Numéro de dépôt: 08736448.5
(22) Date de dépôt: 22.04.2008
(51) Int. Cl.: B29C 49/42, B65G 47/90

(54) **DISPOSITIF DE TRANSFERT ET INSTALLATION DE TYPE LINEAIRE POUR LA FABRICATION DE RECIPIENTS**
TRANSFERVORRICHTUNG UND LINEARES GERÄT ZUR HERSTELLUNG VON BEHÄLTERN
TRANSFER DEVICE AND LINEAR-TYPE APPARATUS FOR THE MANUFACTURE OF CONTAINERS

(30) Priorité: 30.04.2007 FR 0754797
(43) Date de publication de la demande: 06.01.2010
(73) Titulaire: Sidel Participations, 76930 Octeville Sur Mer (FR)
(72) Inventeur: NG, Kheng Joo, F-76930 OCTEVILLE SUR MER (FR); FREIRE DIAZ, Philippe, F-76930 OCTEVILLE SUR MER (FR)
(74) Mandataire: Thibaudeau, David A. C. R.
(86) Numéro de dépôt international: PCT/EP2008/054841
(87) Numéro de publication internationale: WO 2008/132090

(56) Documents cités:
- EP-A- 1 375 395
- FR-A- 2 479 077
- FR-A- 2 774 666
- FR-A- 2 879 179

## Description

L'invention concerne un dispositif de transfert, notamment de préformes ou de récipients, et une installation de type linéaire pour la fabrication de récipients comportant un tel dispositif.

On connaît de nombreuses installations pour la fabrication de récipients, tels qu'un flacon ou une bouteille, notamment à partir de préformes réalisées en matière plastique, par exemple en PET (Polyéthylène téréphtalate).

Dans ces installations, les préformes sont généralement, dans un premier temps, chauffées au défilé dans une unité de conditionnement ou traitement thermique comportant au moins un four destiné à chauffer les préformes jusqu'à une température déterminée proche de leur température de transition vitreuse et sont, dans un deuxième temps, transférées directement vers une unité de moulage, encore appelée unité de soufflage, afin d'être mises en forme par soufflage ou par étirage-soufflage.

De telles installations comportent au moins un dispositif de transfert pour transporter entre les différentes unités les préformes et/ou les récipients, généralement par l'intermédiaire de leurs cols pourvus d'une collerette radiale.

Dans les installations de fabrication de récipients, on distingue principalement, en fonction de la conception de l'unité de moulage, deux grandes familles, à savoir d'une part des installations dites "rotatives" et, d'autre part, des installations dites "linéaires", plus particulièrement visées par !'invention.

On rappellera que dans la première, l'unité de moulage de l'installation est une machine rotative comportant un carrousel qui porte une pluralité de moules répartis sur sa circonférence, chaque moule, parfois appelé moule "en portefeuille", comprenant deux demi-moules montés en rotation l'un par rapport à l'autre selon un axe parallèle à l'axe du récipient, et où les récipients sont donc successivement moulés à l'unité.

A titre d'exemple, on pourra se référer pour la première famille d'installation de type "rotative" aux documents de la demanderesse WO-A1-99/03667 (figure 5) ou WO-A1-00/69614.

Dans la seconde famille, l'unité de moulage de l'installation est dite de type "linéaire" car, par comparaison, la machine comporte un moule qui comprend deux demi-moules déplaçables en translation l'un par rapport à l'autre, perpendiculairement au plan de joint du moule.

Les cadences de fabrication sont généralement plus élevées dans les installations de la première famille (supérieures à 1500 récipients/heure/moule) que dans les installations de la seconde famille.

C'est la raison pour laquelle, les installations de type "linéaire" comportent généralement un moule multi-empreintes pour le moulage simultané de plusieurs récipients, au moins deux récipients, ce qui permet d'accroître les cadences des installations de la seconde famille.

A titre d'exemple, on pourra se référer pour la seconde famille d'installation de type "linéaire" au document de la demanderesse FR-A1-2.879.179 concernant un dispositif de transfert destiné à équiper une installation de fabrication de récipients de type linéaire selon le préambule de la revendication 1.

Le dispositif de transfert a notamment pour fonction d'y transporter un groupe de préformes (ou ébauches) depuis la sortie du four de l'unité de conditionnement thermique, où elles sont chargées, jusqu'à l'unité de moulage où elles sont déchargées pour y être transformées par soufflage ou étirage-soufflage en autant de récipients, en l'occurrence par groupe de quatre récipients.

Ce document décrit plus particulièrement des moyens de liaison aptes à faire varier l'écartement entre les modules constituant le dispositif de transfert, plus précisément pour faire varier l'écartement entre les modules d'un pas primaire P1 correspondant à l'écartement entre deux préformes successives à la sortie du four, à un pas secondaire P2, supérieur au pas primaire P1, qui correspond à l'écartement nécessaire au déchargement entre chaque module portant une préforme et qui est déterminé par l'écartement dans le moule entre deux empreintes successives de récipients.

Chaque module (ou chariot) du dispositif de transfert comporte des moyens de préhension formés par une pince comportant deux mors articulés, autour d'un axe B, entre une position d'ouverture et une position de fermeture vers laquelle les mors de la pince sont rappelés élastiquement par l'intermédiaire d'un organe élastique.

Pour procéder au chargement d'une préforme, la pince doit successivement s'ouvrir (position d'ouverture) pour que les mors se positionnent autour du col de la préforme puis se refermer autour du col (position de fermeture) au dessus de la collerette de la préforme.

Le déplacement des mors de la pince entre les positions d'ouverture et de fermeture n'est pas commandé sélectivement mais obtenu directement par coopération avec le col de la préforme.

En effet, l'extrémité libre de chaque mors de la pince présente avantageusement un profil en "V" déterminé qui est constitué d'une première surface avant et d'une deuxième surface arrière formant chacune une rampe destinée à coopérer avec le col de la préforme respectivement lors du chargement (préhension) et lors du déchargement (libération).

Pour procéder au chargement d'une préforme à la sortie du four, la pince est déplacée transversalement vers l'avant en direction de la préforme et de manière synchrone par rapport à la vitesse de déplacement des préformes qui, issues du four, circulent suivant la direction longitudinale de déplacement.

Chaque pince va venir au contact de la partie du col de la préforme située au dessus de la collerette et les mors vont donc s'écarter puis se refermer aussitôt autour du col sous l'effort de rappel de l'organe élastique, l'ouverture de la pince étant facilitée par la coopération de formes entre la première surface avant du profil en "V" et le col cylindrique de la préforme.

L'ouverture des mors de la pince est donc obtenue par un engagement de la pince sur le col de la préforme avec un effort suffisant pour vaincre l'effort exercé sur les mors par l'organe de rappel élastique, c'est-à-dire obtenue par enclenchement ou introduction "en force".

De la même manière, lorsque la pince est déplacée transversalement vers l'arrière pour procéder au déchargement, chaque préforme étant immobilisée par le moule, les mors vont s'écarter pour libérer la préforme avant de se refermer à vide sous l'effort de rappel de l'organe élastique, lors du déchargement l'ouverture de la pince est là encore facilitée par la coopération de formes entre la deuxième surface arrière du profil en "V" des mors et le col cylindrique de la préforme.

Cependant, un tel dispositif de transfert ne donne pas satisfaction dans le cas d'une installation de type linéaire, en particulier lorsque l'installation comporte une unité de conditionnement thermique comportant un four destiné à réaliser un traitement thermique du corps de la préforme de type "chauffe préférentielle".

Un traitement thermique du corps de la préforme par "chauffe préférentielle" consiste à chauffer sélectivement et différemment certaines portions du corps de la préforme de manière que la température dans l'ensemble du corps de la préforme ne soit pas homogène suivant l'axe de la préforme mais comporte des portions longitudinales relativement plus chaudes qui alternent avec d'autres portions longitudinales intercalaires relativement moins chaudes, les premières étant aptes à se déformer plus facilement que les dernières au cours de la déformation ultérieure du corps de la préforme lors du soufflage ou étirage-soufflage.

Grâce à un tel traitement thermique, il est possible de fabriquer des récipients présentant partout une épaisseur de paroi approximativement constante bien qu'ayant un corps de forme complexe.

Par récipient de forme complexe, on entend généralement un récipient final qui ne soit pas approximativement cylindrique de révolution mais qui présente par exemple une section horizontale polygonale (triangulaire, quadrangulaire, pentagonale, etc.) ou encore un récipient à corps aplati, tel que les flacons destinés à contenir des produits d'entretien ou d'hygiène et dont les cols sont pourvus de moyens de pulvérisation ou vaporisation du produit, voir d'un bouchon.

Pour de plus amples détails sur le traitement thermique de la préforme par chauffe préférentielle, on se reportera par exemple avantageusement au document WO-A-94/23932.

Un dispositif de transfert du type de celui décrit dans le document FR-A1-2.879.179 précité ne donne pas satisfaction, notamment pour le transport de préformes traitées thermiquement selon un procédé de "chauffe préférentielle".

En effet, on a constaté que l'introduction en force des mors de la pince autour du col de la préforme peut provoquer un mouvement de rotation de la préforme autour de son axe vertical modifiant ainsi la position angulaire déterminée desdites porions plus ou moins chauffées, conduisant à un mauvais positionnement (décalage angulaire) des préformes à l'intérieur du moule.

On comprendra que le décalage angulaire des portions plus ou moins chauffées du corps de la préforme par rapport à une position de référence, déterminée à l'intérieur du moule, aboutit à l'obtention d'un récipient non conforme à l'issue de l'opération de moulage de la préforme.

C'est la raison pour laquelle, le dispositif de transfert doit permettre de transporter les préformes du four jusqu'au moule en maintenant chaque préforme dans ladite position de référence déterminée, lorsque l'installation est du type comportant une unité de conditionnement thermique avec un four à chauffe préférentielle.

Indépendamment de la mise en oeuvre d'un traitement de chauffe préférentielle des préformes dans l'installation, l'utilisation d'un dispositif de transfert du type précité (FR-A1-2.879.179) peut encore provoquer, lors de l'emmanchement des mors de la pince pour la préhension ou la libération des récipients, l'apparition de marques plus ou moins accentuées sur les cols des préformes ou des récipients, ce qui est particulièrement préjudiciable pour la qualité finale du récipient.

De plus, dans le cas particulier du traitement thermique à chauffe préférentielle, ce problème de marques et de détérioration du col est encore accru en raison du fait que ce type de traitement est notamment destiné à la fabrication de récipients de forme complexe, tels que des flacons, qui présentent généralement des cols moins résistants par comparaison avec le col d'une bouteille conventionnelle ayant une forme cylindrique de révolution.

Ainsi, selon la matière thermoplastique utilisée et le type de récipient final désiré, l'introduction en force des mors de la pince autour du col provoque parfois l'apparition de copeaux de matière qui constituent une pollution indésirable susceptible d'affecter notamment le procédé de fabrication ou une détérioration du récipient telle qu'il devient irrémédiablement inutilisable, car trop fragilisé ou non acceptable esthétiquement.

La présente invention vise à résoudre les inconvénients précités, en particulier le contrôle de la position angulaire de la préforme lors du transfert et la détérioration du col de la préforme ou du récipient.

Dans ce but, l'invention propose un dispositif de transfert d'une préforme, ou d'un récipient, comportant au moins une pince qui est constituée par deux leviers horizontaux montés articulés autour d'un axe vertical entre une position ouverte et une position fermée de la pince et qui comporte des moyens de rappel élastique des leviers vers la position fermée, caractérisé en ce que le dispositif de transfert comporte un mécanisme pour commander sélectivement l'ouverture et la fermeture de la pince, ce mécanisme comportant :
- un organe d'écartement des leviers destiné à être entraîné par une bielle d'entraînement qui est montée pivotante autour d'un arbre, la bielle d'entraînement de l'organe d'écartement comportant au moins une extrémité libre qui est apte à coopérer avec des premiers moyens d'actionnement destinés à provoquer l'ouverture de la pince à l'encontre de premiers moyens de rappel élastique des leviers, et
- des moyens de verrouillage associés qui sont montés mobiles entre une position verrouillée dans laquelle la pince est maintenue en position ouverte et une position escamotée dans laquelle la pince est libre de se fermer, les moyens de verrouillage étant aptes à coopérer avec des seconds moyens d'actionnement destinés à provoquer le déplacement des moyens de verrouillage, de la position verrouillée vers la position escamotée, de manière à déclencher automatiquement la fermeture de la pince.

Selon d'autres caractéristiques du dispositif de transfert selon l'invention :
- l'organe d'écartement est solidaire en rotation de la bielle d'entraînement de manière que l'ensemble formé par l'organe d'écartement et la bielle d'entraînement est susceptible de pivoter autour de l'arbre vertical entre :
   - une position active, correspondant à la position verrouillée des moyens de verrouillage, dans laquelle l'organe d'écartement est maintenu pour solliciter, à l'encontre des premiers moyens de rappel élastique, les leviers dans la position d'ouverture de la pince, et

- une position passive, correspondant à la position escamotée des moyens de verrouillage, dans laquelle l'organe d'écartement libéré, qui est sollicité par les premiers moyens de rappel élastique, coopère avec des moyens de butée qui déterminent la position de fermeture de la pince ;
   - les moyens de verrouillage comportent un doigt de verrouillage qui est monté mobile entre la position escamotée et la position verrouillée dans laquelle le doigt de verrouillage, qui est sollicité par des seconds moyens de rappel élastique, coopère avec une encoche complémentaire pour immobiliser l'ensemble formé par l'organe d'écartement et la bielle d'entraînement à l'encontre des premiers moyens de rappel élastique ;
   - les moyens de verrouillage comportent un élément de commande de la fermeture de la pince qui, apte à coopérer sélectivement avec les premiers moyens d'actionnement, est susceptible de provoquer le déverrouillage en déplaçant, à l'encontre des seconds moyens de rappel élastique, le doigt de verrouillage de la position verrouillée à la position escamotée de manière que, libérant l'ensemble formé par l'organe d'écartement et la bielle d'entraînement, les premiers moyens de rappel élastique des leviers provoquent la fermeture automatique de la pince ;
   - l'élément de commande de fermeture et le doigt de verrouillage sont montés solidaires de l'extrémité libre d'un bras de support qui est monté pivotant à son autre extrémité autour d'un axe vertical, le bras de support étant sollicité par les seconds moyens de rappel élastique des moyens de verrouillage ;
   - la bielle d'entraînement de l'organe d'écartement comporte à son extrémité libre un élément de commande de l'ouverture de la pince qui, apte a coopérer sélectivement avec les seconds moyens d'actionnement, est susceptible de provoquer le déplacement de l'organe d'écartement de la position passive vers la position active correspondant à la position ouverte de la pince ; - le mécanisme comporte un levier comportant une extrémité qui est reliée à la bielle d'entraînement et dont l'autre extrémité libre comporte l'encoche complémentaire du doigt de verrouillage ;
   - le levier comporte une surface de guidage, adjacente à l'encoche, contre laquelle le doigt de verrouillage est en appui en position escamotée, le doigt de verrouillage parcourt la surface de guidage formant rampe lorsque le levier est entraîné par la bielle d'entraînement que déplace vers la position active les premiers moyens d'actionnement en coopérant avec l'élément de commande de l'ouverture de la pince, et, lorsque la bielle d'entraînement atteint la position active correspondant à la position ouverte de la pince, le doigt de verrouillage bascule simultanément en position verrouillée en pénétrant dans l'encoche.

L'invention concerne encore une installation linéaire pour la fabrication de récipients à partir de préformes en matière thermoplastique, comportant successivement, d'amont en aval, suivant une direction longitudinale de déplacement au moins :
- une unité de conditionnement thermique comportant des moyens de chauffage, tels qu'un four à chauffe préférentielle, destiné à chauffer les préformes jusqu'à une température déterminée,
- une unité de moulage comportant au moins un moule pour transformer par soufflage ou par étirage-soufflage au moins une préforme en récipient, et au moins
- un dispositif de transfert qui est destiné à transférer une préforme, ou un groupe de préformes, de l'unité de conditionnement thermique jusqu'à l'unité de moulage.

Selon d'autres caractéristiques de l'installation :
- l'installation comporte un premier dispositif de transfert comportant au moins un module, ou un groupe de modules, apte à transférer simultanément au moins une préforme, ou un groupe de préformes, depuis une zone de chargement située à la sortie de l'unité de conditionnement thermique jusqu'à l'unité de moulage ;
- au moins les modules du premier dispositif de transfert des préformes sont reliés entre eux par l'intermédiaire de moyens de liaison aptes à faire varier l'écartement longitudinal séparant deux pinces successives, entre un premier écartement, dit PAS1, correspondant à une configuration contractée des modules et un deuxième écartement, dit PAS2, correspondant à une configuration déployée des modules ;
- chaque module du premier dispositif de transfert des préformes comporte une pince dont l'ouverture et la fermeture est commandée sélectivement par l'intermédiaire du mécanisme de manière à assurer notamment le transfert de la préforme en la maintenant dans une position angulaire déterminée depuis son chargement jusqu'à son déchargement dans un moule de l'unité de moulage ;
- les premiers moyens d'actionnement sont agencés au niveau de la zone de chargement en sortie de l'unité de conditionnement thermique de manière à coopérer avec l'élément de commande de fermeture de chaque pince pour commander sélectivement la fermeture de chaque pince autour du col de chaque préforme à transférer ;
- les seconds moyens d'actionnement sont agencés au niveau de l'unité de moulage de manière à coopérer avec l'élément de commande d'ouverture de chaque pince pour commander sélectivement l'ouverture de chaque pince lorsque les préformes sont immobilisées dans la position angulaire déterminée au moins par le moule ;
- l'installation comporte, en aval du premier, un second dispositif de transfert comportant un mécanisme similaire qui est apte à transférer vers l'aval un récipient , ou un groupe de récipients, fabriqué par l'unité de moulage par l'intermédiaire d'au moins un module, ou un groupe de modules ;
- les seconds moyens d'actionnement agencés au niveau de l'unité de moulage sont aptes à coopérer avec l'élément de commande de fermeture de chaque pince du second dispositif de transfert de manière à commander sélectivement la fermeture de chaque pince autour du col du récipient fabriqué destiné à être transféré vers l'aval ;
- les seconds moyens d'actionnement sont montés mobiles entre une première position d'actionnement et une deuxième position d'actionnement de manière à coopérer sélectivement avec l'élément de commande de fermeture de chaque pince du second dispositif de transfert des récipients dans la première position et avec l'élément de commande d'ouverture de chaque pince du premier dispositif de transfert des préformes dans la deuxième position ;
- l'installation comporte au moins des premiers moyens de transmission aptes à déplacer selon la direction longitudinale le premier dispositif de transfert des préformes et/ou du second dispositif de transfert des récipients et des seconds moyens de transmission aptes à déplacer selon une direction transversale, orthogonale à la direction longitudinale de déplacement, les pinces des modules du premier dispositif de transfert des préformes et/ou le second dispositif de transfert des récipients respectivement, de manière à procéder au chargement ou au déchargement des préformes ou des récipients ;
- l'installation comporte des troisièmes moyens d'actionnement qui, agencés en aval de l'unité de moulage, sont aptes à coopérer avec l'élément de commande d'ouverture de chaque pince pour commander sélectivement l'ouverture de chaque pince du second dispositif de transfert de manière à libérer les récipients.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui représente schématiquement une installation linéaire pour la fabrication de récipient ;
- les figures 1A et 1B sont des vues de détail qui représentent respectivement un exemple de réalisation d'une préforme et la partie supérieure d'une bouteille, obtenue à partir d'une telle préforme, avec un bouchon muni d'une bague de sécurité ;
- la figure 2 est une vue en perspective représentant en éclaté les différents composants de l'une des pinces du dispositif de transfert des préformes et de son mécanisme associé pour commander sélectivement l'ouverture et la fermeture selon l'invention ;
- les figures 3A à 3C sont respectivement des vues en perspective, de dessus et de dessous de l'organe d'écartement des leviers ;
- la figure 4 est une vue en perspective de la platine ;
- la figure 5 est une vue de dessus de la platine avec une coupe horizontale partielle du boîtier qui illustre les moyens de rappel élastique qui sollicite vers la position de verrouillage le bras portant le doigt de verrouillage ;
- la figure 6 est une vue arrière en perspective qui représente le bras de support et le pion ;
- les figures 7A et 7B sont respectivement une vue de dessus de la bielle d'entraînement et une vue en perspective d'une variante de réalisation de l'encoche de la bielle d'entraînement ;
- les figures 8 et 9 sont des vues en perspective, respectivement de trois quart gauche et de trois quart droit, qui représentent une pince selon la figure 2 et illustrent la position des différents composants du mécanisme dans la position ouverte de la pince et dans la position fermée de la pince ;
- les figures 10 et 11 sont des vues de dessus qui représentent un dispositif de transfert de préformes comportant quatre modules équipés d'une pince et qui illustrent respectivement la configuration contractée des modules correspondant à un premier écartement PAS1 et la configuration déployée des modules à un deuxième écartement PAS2 ;
- les figures 12 et 13 sont des vues en perspective, de trois quart gauche, qui représentent l'un des modules du dispositif de transfert des préformes selon les figures 10 et 11 et les moyens de transmission de mouvement associés pour déplacer le module selon les directions longitudinale et transversale et qui illustrent respectivement une position extrême arrière dans laquelle le dispositif est notamment susceptible d'être déplacé longitudinalement et une position extrême avant dans laquelle la pince est déployée pour procéder aux opérations de chargement ou de déchargement des préformes ;
- la figure 14 est une vue en perspective qui représente le second dispositif de transfert équipant l'installation et qui, destiné au transfert des récipients fabriqués, illustre un second dispositif de transfert comportant, comme le premier, quatre pinces équipées chacune d'un mécanisme associé pour en commander sélectivement l'ouverture et la fermeture ;
- la figure 15 est une vue en perspective qui représente les premiers moyens d'actionnement aptes à coopérer avec les éléments de commande de la fermeture des pinces du dispositif de transfert des préformes et les seconds moyens d'actionnement aptes à coopérer sélectivement avec les éléments de commande de l'ouverture des pinces du dispositif de transfert des préformes et les éléments de commande de la fermeture des pinces du dispositif de transfert des récipients ;
- la figure 16 est une vue en perspective qui représente les troisièmes moyens d'actionnement aptes à coopérer avec les éléments de commande de l'ouverture des pinces du dispositif de transfert des récipients ;
- les figures 17 à 22 sont des vues de dessus d'une installation linéaire représentée schématiquement et qui illustrent les différentes étapes d'un cycle de transfert au cours duquel le premier dispositif de transfert transporte un groupe de quatre préformes de la sortie du four au moule et au cours duquel parallèlement le second dispositif de transfert transporte les quatre récipients fabriqués, à partir des précédentes préformes transférées par le premier dispositif, depuis le moule jusqu'à une unité située en aval suivant la direction longitudinale de déplacement ;
- les figures 23 à 26 sont des vues de dessus qui représentent en détail la coopération des différents moyens d'actionnement avec les éléments de commande d'ouverture et/ou de fermeture des pinces de chaque dispositif de transfert suivant le cycle de transfert représentés aux figures 17 à 22.

Dans la description et les revendications, on utilisera à titre non limitatif les termes "amont" et "aval", "avant" et "arrière", "supérieur" et "inférieur", "gauche" et "droite", etc. et les orientations "longitudinale", "verticale" et "transversale" pour désigner respectivement des éléments selon les définitions données dans la description et par rapport au trièdre (L, V, T) représenté sur les figures.

Dans la suite de la présente description, les éléments identiques, similaires ou analogues de l'invention seront désignés par les mêmes chiffres de référence, de plus l'orientation verticale est déterminée par simple convention et ne doit donc pas être interprétée limitativement comme correspondant à la gravité terrestre.

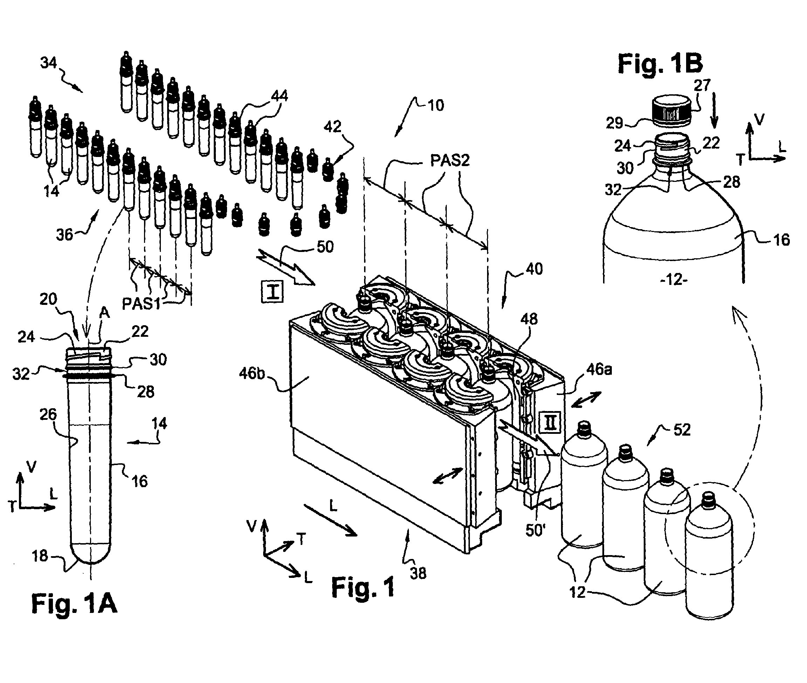

On a représenté schématiquement à la figure 1, une installation 10 de type linéaire pour la fabrication de récipients 12 à partir de préformes 14.

De manière connue, les préformes 14 sont réalisées en matière thermoplastique, notamment en PET (Polyéthylène téréphtalate) destinées à être chauffées puis moulées par soufflage ou par étirage-soufflage afin d'obtenir au final des récipients 12, tels que des flacons ou des bouteilles.

Les préformes 14 sont généralement fabriquées selon un procédé de moulage par injection, étape de moulage qui peut être intégré à l'installation ou réalisée sur un autre lieu que celui où se trouve l'installation 10.

Comme on peut le voir en détail sur la figure 1A, la préforme 14 a globalement la forme d'un tube qui s'étend ici verticalement suivant un axe principal vertical A.

La préforme 14 comporte un corps 16, ici globalement cylindrique, qui est fermé à son extrémité inférieure par un fond 18 et qui, à l'opposé, est ouvert à son extrémité supérieure par une ouverture 20 délimitée par le buvant d'un col 22.

Depuis le fond 18 jusqu'au col 22, la paroi 26 cylindrique interne du corps 16 de la préforme 14 délimite un volume intérieur correspondant, après soufflage de la préforme, au volume intérieur du récipient 12 final, lequel est destiné à être rempli ultérieurement par l'ouverture 20.

Avantageusement, le col 22 de la préforme 14 possède déjà la forme définitive du col du récipient 12 final, par exemple le col 22 d'une bouteille, comme illustré en détail par la figure 1B.

De préférence, le col 22 est pourvu de moyens 24, représentés ici sous la forme d'un filetage hélicoïdal, aptes à coopérer avec des moyens complémentaires d'un bouchon 27 destiné à fermer le récipient 12.

Le col 22 comporte au moins une collerette 28 externe qui s'étend radialement vers l'extérieur, sur toute la circonférence de la partie inférieure du col 22.

Avantageusement, le col 22 comporte un bourrelet 30 qui, agencé verticalement au dessus de la collerette 28, délimite avec ladite collerette 28 une rainure 32 annulaire destinée à recevoir ultérieurement une bague 29 d'inviolabilité reliée au bouchon 27 par des liens cassants.

De manière connue, une telle bague d'inviolabilité a pour fonction de permettre au consommateur ou à l'utilisateur du récipient d'avoir la certitude, par un simple examen visuel, que le produit n'a pas encore été ouvert, les liens reliant la bague au bouchon étant destinés à se rompre définitivement lors de la première ouverture du récipient 12.

La figure 1 illustre schématiquement les principales étapes de la fabrication d'un récipient 12 à partir d'une préforme 14 dans une installation 10 de type linéaire.

Dans l'installation 10, les préformes 14 puis les récipients 12 se déplacent, d'amont en aval, suivant une direction principale L de déplacement d'orientation longitudinale de manière à parcourir successivement les différentes unités ou postes de l'installation 10 suivant un trajet sensiblement rectiligne.

L'installation 10 de fabrication de récipients, comporte successivement au moins une unité de conditionnement thermique 34 comportant des moyens de chauffage destinés à chauffer les préformes 14 jusqu'à une température déterminée et, en aval, une unité de moulage 38 comportant au moins un moule 40 pour transformer par soufflage ou par étirage-soufflage au moins une préforme 14 en un récipient 12.

Les moyens de chauffage comportent par exemple un four 36 du type à chauffe préférentielle et le moule 40 est avantageusement un moule multi-empreintes apte à mouler simultanément plusieurs préformes 14 pour produire autant de récipients 12, en l'occurrence ici par groupe de quatre.

Le four 36 comporte des moyens de transport 42, tels qu'un carrousel, destinés à transporter les préformes 14 à travers le four 36 afin que les préformes 14 soient chauffées au défilé en étant plus ou moins exposées au rayonnement de lampes infrarouge (non représentées) pour réaliser une chauffe préférentielle.

Ce procédé de chauffage selon lequel la préforme 14 comporte des portions chauffées différemment selon un profil de chauffe bien déterminé, notamment en fonction de la géométrie du récipient 12 à produire, est connu comme cela a été rappelé en préambule et ne sera donc pas décrit plus en détail.

Chaque préforme 14 est par exemple suspendue par l'intérieur du col 22 à une tournette 44 par l'intermédiaire de laquelle la préforme 14 est entraînée en rotation sur elle-même autour de son axe vertical A.

Les préformes 14 sortent du four 36 espacées entre elles d'un premier écartement, dit PAS1, correspondant à l'écartement selon la direction longitudinale séparant les axes verticaux A respectifs de deux préformes successives, la valeur du premier écartement PAS1 correspondant à l'écartement des tournettes 44 qui est déterminé en fonction du diamètre des préformes 14.

Avantageusement, l'écartement PAS1 est déterminé de manière à optimiser le nombre de préformes 14 chauffées dans le four 36.

De préférence, l'unité de moulage 38 est équipée d'un moule 40 comportant deux demi-moules 46a, 46b déplaçables en translation l'un par rapport à l'autre, perpendiculairement au plan de joint vertical d'orientation longitudinale du moule 40, chaque demi-moules 46a, 46b comportant par exemple chacun quatre demi-empreintes 48.

L'installation 10 linéaire comporte au moins un premier dispositif de transfert 50 apte à transporter les préformes 14 depuis la sortie du four 36 à chauffe préférentielle où les préformes 14 sont prélevées (chargement) puis acheminées jusqu'au moule 40 de l'unité de moulage 38 où les préformes 14 sont introduites dans moule 40 (déchargement).

De préférence, l'installation 10 comporte, en aval de l'unité de moulage 38, une unité 52 telle qu'une unité de remplissage (non représentée) ainsi qu'une unité de bouchage du récipient rempli. En variante, l'unité 52 agencée en sortie de l'installation 10 comporte des moyens d'évacuation ou d'accumulation (stockage) des récipients 12 produits pour procéder ultérieurement à leur remplissage et au bouchage.

Avantageusement, l'installation 10 comporte un second dispositif de transfert 50' destiné à évacuer vers l'aval les récipients 12 fabriqués, c'est-à-dire apte à prélever les récipients 12 de manière synchrone avec l'ouverture du moule 40, puis à les transférer de l'unité de moulage 38 vers l'unité 52.

Sur la figure 1, le premier dispositif de transfert 50 des préformes 14 est représenté par une première flèche "I" tandis que le second dispositif de transfert 50' des récipients 12 est représenté par une seconde flèche "II".

Avantageusement, les dispositifs de transfert 50 et 50' sont susceptibles de transférer un groupe de préformes 14 et un groupe de récipients 12, chaque dispositif de transfert 50, 50' comportant respectivement quatre modules ou chariots aptes à transférer simultanément un groupe de quatre préformes 14 ou de quatre récipients 12.

Avantageusement, le premier dispositif de transfert 50 comporte des moyens de liaison aptes à faire varier l'écartement longitudinal entre les modules depuis le premier écartement PAS1 correspondant à l'écartement longitudinal entre les préformes 14 lors du chargement jusqu'à un deuxième écartement, dit PAS2, supérieur au premier PAS1 et correspondant à l'écartement longitudinal nécessaire entre les préformes 14 pour permettre leur déchargement dans le moule 40 (voir figure 1).

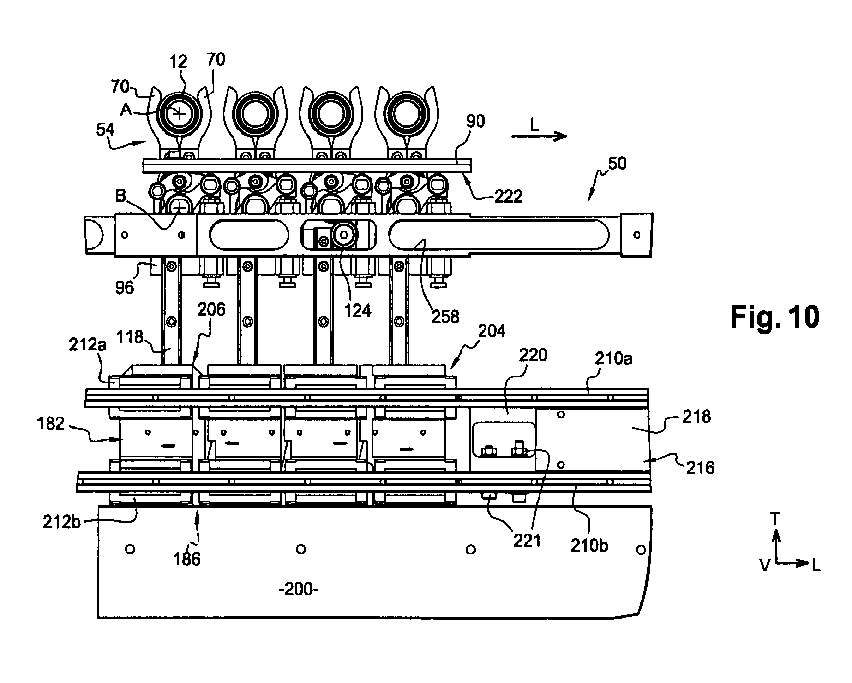

Les moyens de liaisons et les modules seront décrits ultérieurement en détail et sont plus particulièrement représentés aux figures 10 à 13.

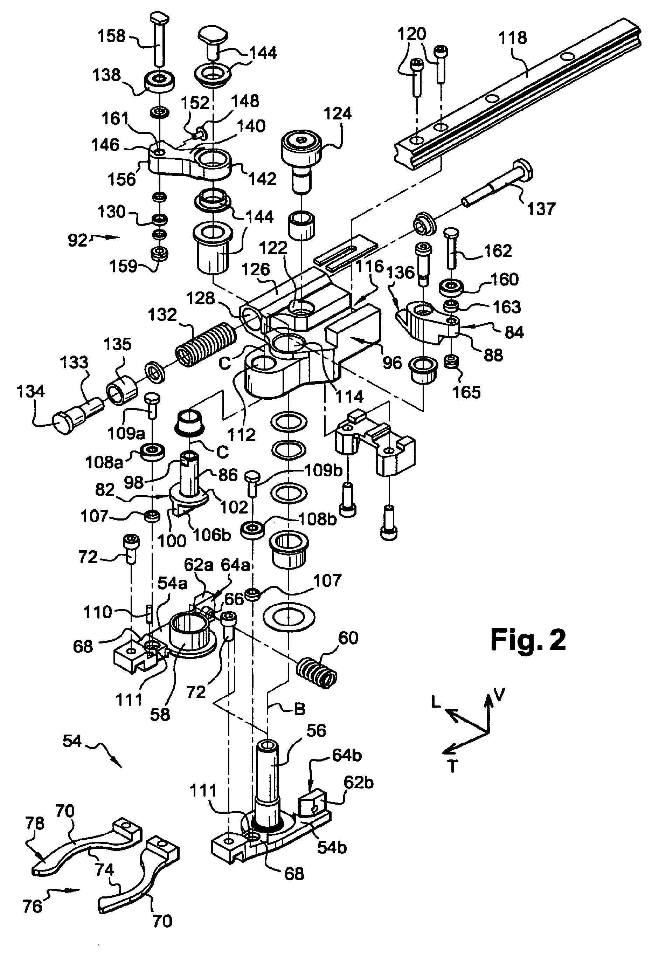

On a représenté en éclaté à la figure 2, la partie avant d'un module du dispositif de transfert 50 des préformes 14 selon un mode de réalisation préféré de l'invention.

Le dispositif de transfert 50 comporte des moyens de préhension constitués par au moins une pince 54 apte à coopérer avec une partie d'une préforme 14 ou d'un récipient 12 de manière à permettre le transfert de ladite préforme ou dudit récipient, en particulier entre les unités ou postes de l'installation 10 linéaire de fabrication.

La pince 54 est constituée par deux leviers 54a, 54b qui s'étendent globalement dans la direction transversale, orthogonale à la direction longitudinale de déplacement indiquée par la flèche L sur la figure 1, les leviers 54a, 54b de la pince 54 s'étendant dans un plan sensiblement horizontal qui est notamment déterminé par rapport à la position du col 22 de la préforme 14.

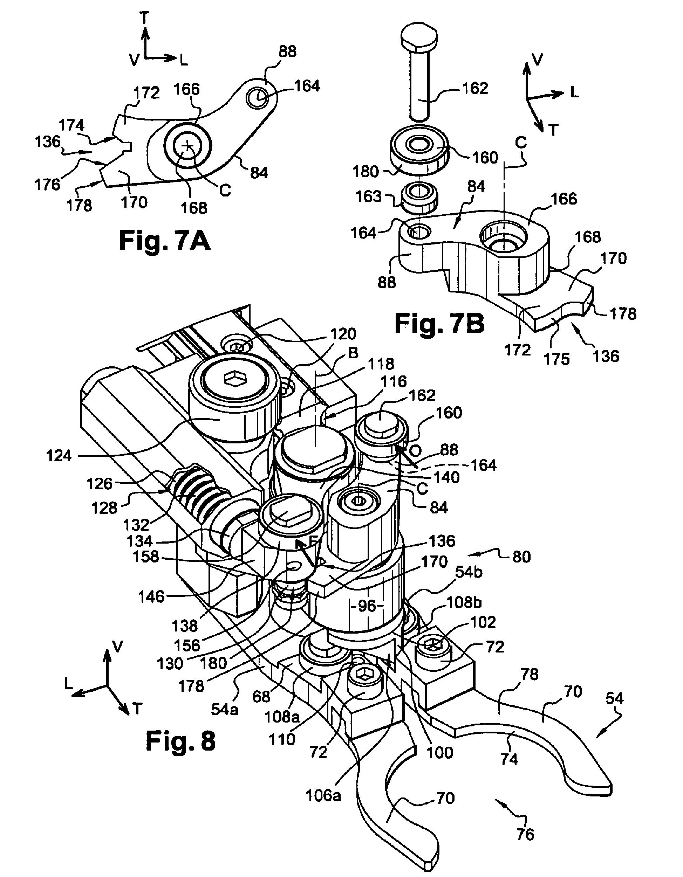

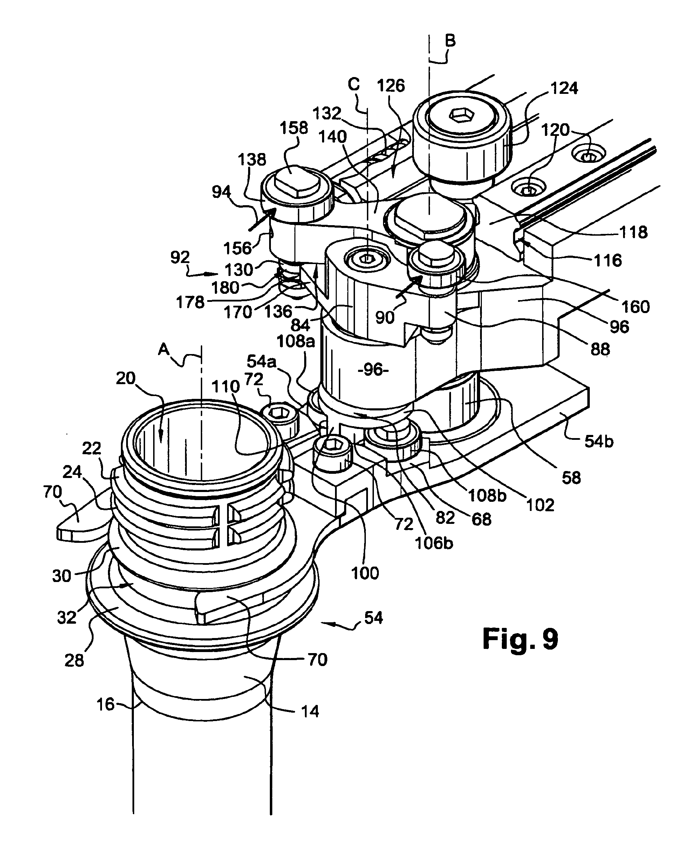

Les leviers 54a, 54b, respectivement gauche et droit sur les figures, sont montés articulés autour d'un axe vertical B entre une position ouverte (figure 8) et une position fermée (figure 9) de la pince 54.

Le levier 54b droit comporte un arbre 56 qui s'étend verticalement vers le haut à partir du levier et autour duquel vient se monter une douille cylindrique 58 complémentaire que comporte l'autre levier gauche 54a de manière à ce que l'arbre et la douille constituent une articulation selon l'axe vertical B entre les leviers 54a, 54b.

De préférence, la pince 54 comporte des moyens de rappel élastique 60 des leviers 54a, 54b, vers ladite position fermée.

Avantageusement, les moyens de rappel élastique 60 des leviers 54a, 54b sont constitués par un ressort qui, travaillant en compression, est ici monté à l'extrémité transversale arrière de la pince 54.

Pour ce faire, chaque levier 54a, 54b comporte à son extrémité arrière une aile, respectivement 62a et 62b, qui d'orientation transversale, s'étend verticalement vers le haut à partir du plan horizontal de référence comprenant les leviers. Avantageusement, chaque aile 62a, 62b comporte sur sa face verticale interne 64a, 64b, un pion 66 de centrage pour le ressort constituant les moyens de rappel élastique 60 des leviers 54a, 54b, chaque pion 66 pénétrant dans les spires d'extrémité du ressort.

Le ressort est en appui à chacune de ses extrémités sur les faces verticales internes 64a, 64b de chaque aile 62a, 62b par l'intermédiaire desquelles le ressort sollicite l'extrémité arrière des leviers 54a, 54b en écartement ce qui provoque, à l'opposé, transversalement, le rapprochement de l'extrémité avant de chaque levier 54a, 54b formant la partie de la pince 54 destinée à réaliser la préhension, encore appelée usuellement mors ou mâchoires.

En variante, les moyens de rappel élastique 60 des leviers 54a, 54b pourraient être agencés transversalement entre l'articulation (arbre 56, douille 58) des leviers ou entre l'articulation et l'extrémité avant formant mors et les moyens de rappel élastique 60 pouvant être constitués par tout autre organe équivalent approprié.

Les leviers de la pince 54 comportent respectivement, en avant de l'articulation (arbre 56, douille 58), une face horizontale supérieure 68 globalement plane sur laquelle sont destinés à être montés des éléments qui seront décrits en détail ultérieurement.

Avantageusement, chaque levier de la pince 54 est réalisé en deux parties distinctes, des parties arrières des leviers comportant l'articulation 56, 58 et les moyens de rappel élastique 60 et des parties avant formant les deux mors de la pince 54, ci-après les mors 70.

Chaque partie avant du levier formant l'un des deux mors 70 est rapportée à fixation sur l'extrémité avant de la partie arrière du levier 54a, 54b correspondant, par exemple par l'intermédiaire d'organes de fixation 72, tels que des vis.

Pour chaque pince 54, il est donc possible de monter et démonter facilement les mors 70 des leviers qui sont destinés à coopérer avec le col 22 de la préforme 14 (ou de la bouteille 12) de manière à adapter rapidement pour chaque application les caractéristiques géométriques des mors 70 de la pince 54 au diamètre et au type de col 22.

Avantageusement, chaque mors 70 comporte intérieurement une face verticale 74 qui, destinée à coopérer avec une partie du col 22 de la préforme 14, présente un profil globalement curviligne complémentaire.

En position fermée de la pince 54 (figure 9), les faces verticales 74 des mors 70 délimitent intérieurement une ouverture 76 globalement circulaire présentant un diamètre légèrement inférieur à celui du col 22 de la préforme 14 à transférer.

De préférence, les mors 70 de la pince 54 sont destinés à venir coopérer avec la rainure 32 du col 22 de la préforme 14 et l'épaisseur des mors 70 est déterminée de manière que la partie adjacente à chaque face verticale 74 puisse s'engager au moins partiellement entre la collerette 28 et le bourrelet 30, les mors 70 de la pince 54 venant ainsi serrer le col 22 de la préforme et étant positionnés au dessus de la collerette 28.

En variante, les mors 70 de la pince sont positionnés en dessous de la collerette 28 radiale qui, en position fermée de la pince 54, est en appui sur une partie adjacente de la face horizontale supérieure 78 de chacun des mors 70, les mors 70 exerçant alors ou non un effort de serrage du col 22.

Une telle variante correspond notamment au positionnement des pinces de transfert selon l'état de la technique FR-A-2.879.179 précité.

On rappellera que dans ce document le prélèvement d'une préforme est obtenu en emmanchant en force la pince autour de la portion du col située sous la collerette et que l'ouverture de la pince résulte de la coopération entre les mors et le col qui provoque leur écartement à l'encontre de l'organe de rappel élastique des leviers.

On comprendra dès lors que l'utilisation de telle pince laisse généralement, à l'issue des opérations de chargement et de déchargement, sur la portion du col située sous la collerette des marques visibles, voire provoque l'apparition de copeaux de matière, ce qui n'est pas satisfaisant pour la qualité du récipient final fabriqué, en particulier son aspect esthétique.

C'est l'une des raisons pour lesquelles, la préhension du col 22 de la préforme 14 ou du récipient 12 par la pince 54 est avantageusement réalisée dans la rainure 32 délimitée par la collerette 28 et le bourrelet 30, lorsque le col 22 est du type comportant une telle rainure.

En effet, même si les mors 70 de la pince 54 laissent des marques dans la rainure 32 du col 22, ces marques ne sont pas visibles sur le récipient final rempli car elles sont ensuite masquées par la bague 29 d'inviolabilité logée dans la rainure 32.

Toutefois, la préhension du col 22 au niveau de la rainure 32 exige une maîtrise et une précision lors des opérations de chargement et déchargement afin notamment que la pince 54 n'endommage pas non plus la collerette 28 ou le bourrelet 30 adjacents.

De plus, le dispositif de transfert 50, 50' selon l'invention est plus particulièrement destiné à équiper une installation 10 linéaire, telle que décrite précédemment et représentée à la figure 1, dans laquelle l'unité de conditionnement thermique 34 de la préforme 14 comporte un four 36, dit à chauffe préférentielle.

Or, l'utilisation de pinces de transfert selon le document FR-A-2.879.179 pose un problème majeur car, lors du chargement notamment, l'introduction dans la pince du col de la préforme peut provoquer un déplacement en rotation autour de l'axe vertical A, ce qui n'est pas admissible avec une préforme traitée selon un procédé de chauffe préférentielle.

En conséquence, la préforme 14 qui est transférée vers l'aval en vue de réaliser l'opération de moulage par soufflage, ne se trouverait plus dans la position angulaire déterminée, dite de référence, lors de son déchargement qui correspond à son introduction dans le moule.

En effet, on comprendra que le décalage angulaire des portions plus ou moins chauffées du corps de la préforme par rapport à cette position de référence, déterminée en fonction du moule, aboutit à l'obtention d'un récipient 12 non conforme à l'issue de l'opération de moulage de la préforme 14.

Conformément à l'invention, le dispositif de transfert 50, 50' comporte un mécanisme 80 pour commander sélectivement l'ouverture et la fermeture de la pince 54 autour du col 22 de la préforme 14 ou du récipient 12 lors des opérations de chargement et de déchargement.

Avantageusement, le dispositif de transfert 50 selon l'invention permet notamment de transporter chaque préforme 14 depuis la sortie du four 36 jusqu'au moule 40 en maintenant précisément chacune des préformes dans ladite position angulaire de référence.

Le mécanisme 80 comporte au moins un organe d'écartement 82 des leviers 54a, 54b destiné à être entraîné par une bielle d'entraînement 84 qui est montée pivotante autour d'un arbre 86, la bielle d'entraînement 84 de l'organe d'écartement 82 comportant au moins une extrémité libre 88 qui est apte à coopérer avec des premiers moyens d'actionnement 90 (figure 10) destinés à provoquer l'ouverture de la pince 54 à l'encontre des moyens de rappel élastique 60 des leviers, dits premiers moyens de rappel élastique.

Le mécanisme 80 comporte encore des moyens de verrouillage 92 associés qui sont montés mobiles entre :
- une position verrouillée dans laquelle la pince 54 est maintenue en position ouverte (figure 8), et
- une position escamotée dans laquelle la pince 54 est libre de se fermer (figure 9), les moyens de verrouillage 92 étant aptes à coopérer avec des seconds moyens d'actionnement 94 destinés à provoquer le déplacement des moyens de verrouillage 92, de la position verrouillée vers la position escamotée, de manière à déclencher automatiquement la fermeture de la pince 54.

On décrira maintenant plus en détail, un exemple préféré de réalisation du mécanisme 80 selon l'invention, dont les différents composants sont notamment illustrés en éclaté à la figure 2 et suivantes puis assemblés aux figures 8 et 9 représentant respectivement les positions ouverte et fermée de la pince 54.

De préférence, le mécanisme 80 comporte une platine 96 pour le montage des différents composants, en particulier celui de l'organe d'écartement 82, de sa bielle d'entraînement 84 et des moyens de verrouillage 92.

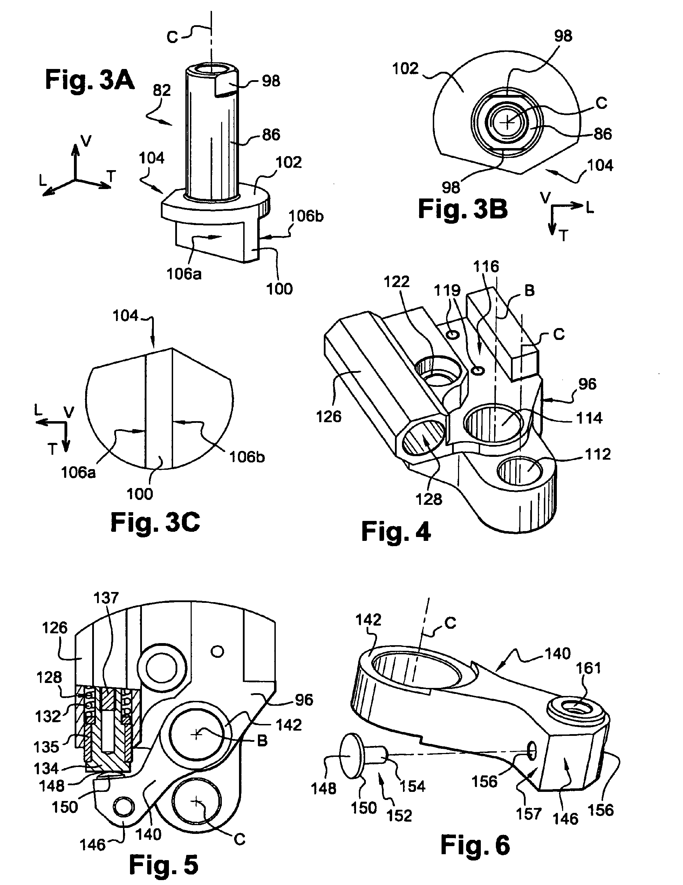

On a représenté en détail l'organe d'écartement 82 aux figures 3A à 3C.

L'organe d'écartement 82 s'étend verticalement autour d'un axe C principal représenté vertical. L'organe d'écartement 82 comporte une partie supérieure constituée par une tige verticale formant l'arbre 86 autour duquel est montée pivotant la bielle d'entraînement 84, l'entraînement en rotation sans jeu entre la bielle d'entraînement 84 et l'organe d'écartement 82 est réalisé par coopération de formes.

De préférence, l'arbre 86 comporte à son extrémité supérieure deux méplats 98, ladite extrémité supérieure de l'arbre 86 étant reçue avec interposition d'éléments intermédiaires dans un logement complémentaire (non représenté) que comporte la bielle d'entraînement 84.

En variante, l'arbre 86 est solidaire de la bielle d'entraînement 84 et apte à coopérer avec une partie de l'organe d'écartement 82 pour son entraînement en rotation autour de l'axe C vertical.

L'organe d'écartement 82 comporte à son extrémité inférieure un écarteur 100 qui est apte à agir sur les leviers 54a, 54b. L'écarteur 100 présente ici la forme d'une paroi rectiligne s'étendant verticalement vers le bas à partir de la face inférieure d'une partie intermédiaire 102 de l'organe d'écartement 82.

La partie intermédiaire 102 a globalement une forme de disque horizontal qui relie l'écarteur 100 et l'extrémité inférieure de l'arbre 86 et qui s'étend circonférentiellement autour de l'arbre 86.

La partie arrière 104 du disque constituant la partie intermédiaire 102 est biseautée formant ainsi un profil en "V", qui n'est ici pas symétrique, de manière que l'organe d'écartement 82 n'interfère pas, lors de son pivotement autour de l'axe C vertical, avec d'autres composants adjacents comme l'articulation constituée par l'arbre 56 et la douille 58 des leviers de la pince 54.

L'écarteur 100 comporte, latéralement de part et d'autre, une face latérale verticale plane, respectivement 106a du côté gauche et 106b du côté droit, qui sont chacune destinées à coopérer avec un galet associé 108a, 108b.

Les galets 108a, 108b sont respectivement montés, par exemple par l'intermédiaire de bagues 107 et de vis 109a et 109b, dans des trous complémentaires 111 que comporte dans sa face horizontale supérieure 68 chacun des leviers 54a, 54b.

Comme illustré aux figures 3a et 3c, l'écarteur 100 de l'organe d'écartement 82 est, en position d'ouverture de la pince 54, à l'avant en appui par une partie de sa face latérale 106b contre le galet droit 108b et, en arrière, en appui par une partie de sa face latérale 106a contre le galet gauche 108a de sorte que lorsque l'organe d'écartement 82 est déplacé en rotation vers la position de fermeture chacun des galets 108a, 108b va rouler contre la face latérale 106a, 106b qui lui est associée, dans une direction opposée à celle de l'autre galet.

En position fermée, une partie de la face latérale 106a de l'écarteur 100 vient en butée contre des moyens de butée 110, constitués par exemple par un pion qui est agencé en avant du galet 108a et qui est monté sur le levier 54a gauche, par exemple monté en force dans un trou que comporte la face horizontale supérieure 68 du levier.

On décrira maintenant la platine 96 représentée aux figures 2 et 4 sur laquelle sont rapportés de nombreux composants.

La platine 96 comporte, à son extrémité transversale avant, un orifice 112 qui est traversé par l'arbre 86 de manière que l'organe d'écartement 82 est monté en dessous de la platine 96 tandis que la bielle d'entraînement 84 est agencée au dessus.

Avantageusement, l'organe d'écartement 82 est solidaire en rotation de la bielle d'entraînement 84 de manière que l'ensemble formé par l'organe d'écartement 82 et la bielle d'entraînement 84 est susceptible de pivoter autour de l'arbre 86 vertical entre respectivement :
- une position active, correspondant à la position verrouillée des moyens de verrouillage 92, dans laquelle l'organe d'écartement 82 est maintenu par les moyens de verrouillage 92 pour solliciter, à l'encontre du ressort formant les premiers moyens de rappel élastique 60, les leviers 54a, 54b dans la position d'ouverture de la pince 54, et
- une position passive, correspondant à la position escamotée des moyens de verrouillage 92, dans laquelle l'écarteur 100 de l'organe d'écartement 82 libéré, qui est sollicité par les moyens de rappel élastique 60, coopère notamment avec le pion formant des moyens de butée 110 qui déterminent la position de fermeture de la pince 54.

La platine 96 comporte, en arrière de l'orifice 112 de passage de l'arbre 86 de l'ensemble formé par l'organe d'écartement 82 et la bielle d'entraînement 84, un autre orifice 114 qui est traversé en tout ou partie par l'arbre 56 porté par le levier 54b pour former l'articulation des leviers 54a, 54b, de la pince 54 autour de l'axe vertical B.

Les orifices 112, 114 sont sensiblement alignés selon la direction transversale de sorte que les axes de rotation B et C, respectivement de l'ensemble formé par l'organe d'écartement 82 et la bielle d'entraînement 84 et des leviers 54a, 54b, sont compris dans un même plan vertical d'orientation transversale.

La platine 96 comporte, en arrière de l'orifice 114, une rainure 116, transversale, dans laquelle est introduite l'extrémité avant d'un rail 118 transversal qui est fixé à la platine par vissage, le rail 118 comportant comme le fond de la rainure 116 deux perçages 119 destinés à permettre le passage des vis 120.

Le rail 118 appartient à des moyens de transmission aptes à permettre le déplacement du sous-ensemble formé par la pince 54 et son mécanisme 80 selon la direction transversale, orthogonalement à la direction longitudinale L de déplacement, moyens de transmission qui seront décrits ultérieurement.

La platine 96 comporte, du côté gauche, adjacent à la rainure 116 pour la fixation du rail 118, d'une part un perçage 122 pour le montage d'un suiveur de came 124 qui sera lui aussi décrit ultérieurement en relation avec les moyens de transmission de mouvement auxquels il appartient et qui sont aptes à permettre un déplacement selon ladite direction longitudinale L de déplacement et, d'autre part, un boîtier 126 comportant une cavité 128 ouverte transversalement à chaque extrémité avant et arrière qui est destinée au montage de seconds moyens de rappel élastique qui vont être décrits ci-après en relation avec les moyens de verrouillage 92 auxquels ils appartiennent.

On décrira maintenant plus particulièrement un exemple de réalisation préféré des moyens de verrouillage 92 qui, associés à l'organe d'écartement 82 et à la bielle d'entraînement 84, constituent principalement ledit mécanisme 80 du dispositif de transfert 50 selon l'invention.

Les moyens de verrouillage 92 comportent un doigt de verrouillage 130 qui est monté mobile entre la position escamotée et la position verrouillée.

Le doigt de verrouillage 130 est sollicité vers la position verrouillée par des seconds moyens de rappel élastique 132 qui sont par exemple constitués par un deuxième ressort hélicoïdal travaillant en compression.

Comme illustré sur la figure 5, le ressort constituant les seconds moyens de rappel élastique 132 de rappel élastique du doigt de verrouillage 130 est monté à l'intérieur de la cavité 128 du boîtier 126 par l'intermédiaire d'une pluralité de moyens 133, 135, 137 dont une tige de support 133 comportant à son extrémité avant une tête d'appui 134 apte à coopérer avec le doigt de verrouillage 130 pour exercer, transversalement vers l'avant, un effort de rappel vers la position verrouillée.

De préférence, les moyens pour le montage du ressort constituant les seconds moyens de rappel élastique 132 comportent encore une douille 135 et une autre tige de support 137 qui est susceptible d'être reliée par vissage à son extrémité avant avec la tige de support 133 avant de manière à mettre avec la douille 135 le ressort constituant les seconds moyens de rappel élastique 132 sous contrainte.

Le doigt de verrouillage 130 coopère avec une encoche 136 complémentaire pour immobiliser l'ensemble formé par l'organe d'écartement 82 et la bielle d'entraînement 84 à l'encontre du ressort formant les premiers moyens de rappel élastique 60.

Les moyens de verrouillage 92 comportent un élément de commande 138 de la fermeture de la pince qui est apte à coopérer sélectivement avec les premiers moyens d'actionnement 90 pour provoquer le déverrouillage.

Les premiers moyens d'actionnement 90 sont susceptibles d'agir sélectivement sur l'élément de commande 138 pour provoquer le déverrouillage en déplaçant, à l'encontre du second ressort formant les seconds moyens de rappel élastique 132, le doigt de verrouillage 130 de la position verrouillée à la position escamotée de manière que, libérant l'ensemble formé par l'organe d'écartement 82 et la bielle d'entraînement 84, le ressort formant les premiers moyens de rappel élastique 60 des leviers 54a, 54b provoque la fermeture automatique de la pince 54.

De préférence, l'élément de commande 138 de la fermeture et le doigt de verrouillage 130 sont montés solidaires de l'extrémité libre d'un bras de support 140 qui est monté pivotant, à son autre extrémité 142 en forme de douille, autour d'un axe vertical confondu avec l'axe vertical B de l'articulation 56, 58 des leviers, par l'intermédiaire d'éléments 144.

Les éléments 144 formant l'axe vertical, par l'intermédiaire duquel l'extrémité 142 du bras de support 140 pivote autour de l'axe vertical B, sont montés dans l'orifice 114 de la platine 96.

L'extrémité libre 146 du bras de support 140 comporte une face d'appui 148, ici disposée verticalement à l'arrière de l'extrémité libre 146, apte à être sollicitée par le ressort constituant les seconds moyens de rappel élastique 132 des moyens de verrouillage 92 par l'intermédiaire de la face verticale avant de la tête d'appui 134. La face d'appui 148 coopère directement avec la face verticale avant de la tête d'appui 134 que sollicite transversalement vers l'avant le ressort constituant les seconds moyens de rappel élastique 132 via la douille 135.

De préférence, comme illustré à la figure 6, la face d'appui 148 est constituée par une surface hémisphérique que comporte la tête 150 d'un pion 152 en forme de « punaise » comportant une tige transversale 154 qui, solidaire de la tête 150, est reçue transversalement dans un logement complémentaire 156 de l'extrémité libre 146 du bras de support 140.

Le logement complémentaire 156 s'étend globalement transversalement à travers l'extrémité libre 146 du bras de support 140, depuis la surface verticale arrière 157 contre laquelle la face de la tête 150 opposée à la surface hémisphérique constituant la face d'appui 148 est en appui, jusqu'à déboucher ici à l'avant du bras.

Avantageusement, la surface hémisphérique constituant la face d'appui 148 du pion 152 permet de conserver un contact permanent avec la face avant de la tête d'appui 134 lorsque le bras de support 140 pivote autour de l'axe B entre ses positions extrêmes correspondant aux positions verrouillée et déverrouillée.

De préférence, le doigt de verrouillage 130 est par exemple constitué par une bague annulaire et l'élément de commande 138 de la fermeture de la pince 54 par un galet.

Le doigt de verrouillage 130 et le galet formant l'élément de commande 138 sont montés sur une tige de support 158 qui s'étend verticalement et qui traverse un trou 161 complémentaire situé à l'extrémité libre 146 du bras de support 140.

La tige de support 158 est montée de manière traversante de sorte que le galet formant l'élément de commande 138, qui est monté à l'extrémité supérieure de la tige de support 158, s'étend verticalement au dessus du bras de support 140, tandis que le doigt de verrouillage 130, qui est monté à son extrémité inférieure, s'étend verticalement en dessous du bras de support 140.

Un écrou 159 est rapporté sur l'extrémité inférieure de la tige de support 158 pour maintenir en position le galet formant l'élément de commande 138 et le doigt de verrouillage 130.

La bielle d'entraînement 84 de l'organe d'écartement 82 comporte à son extrémité libre 88 un élément de commande 160 de l'ouverture de la pince 54 qui est apte à coopérer sélectivement avec les seconds moyens d'actionnement 94.

L'élément de commande 160 de l'ouverture de la pince 54 est susceptible, lorsqu'il est sollicité par les seconds moyens d'actionnement 94, de provoquer le déplacement de l'organe d'écartement 82, donc de l'écarteur 100, de la position passive vers la position active correspondant à la position ouverte de la pince 54.

De manière analogue à l'élément de commande 138 de fermeture porté par le bras de support 140 et comme cela est illustré par les figures 2 et 7A-7B, l'élément de commande 160 de l'ouverture de la pince 54 est constitué par un galet qui est monté sur un tige verticale de support 162 qui traverse un trou 164 de l'extrémité libre 88 de la bielle 84.

Une rondelle 163 est ici interposée entre le galet constituant l'élément de commande 160 et la face supérieure de la bielle 84 entourant le trou 164 ; un écrou 165 est par exemple rapporté sur l'extrémité de la tige verticale de support 162 pour maintenir l'ensemble.

Avantageusement, le galet constituant l'élément de commande 160 de commande d'ouverture de la pince s'étend au dessus de la bielle d'entraînement 84, globalement dans un plan horizontal comme le galet formant l'élément de commande 138.

La bielle d'entraînement 84 comporte une extrémité libre 88 portant le galet constituant l'élément de commande 160 de fermeture de la pince 54 et une extrémité 166 opposée qui est montée articulée autour de l'axe vertical C commun avec l'arbre 86 vertical de l'organe d'écartement 82.

De préférence, le mécanisme 80 comporte un levier 170 comportant une extrémité 168 qui est reliée à l'extrémité 166, articulée, de la bielle d'entraînement 84 de manière que ledit levier 170 soit solidaire en rotation de la bielle d'entraînement 84, c'est-à-dire des déplacements autour l'axe C entre les positions active et passive de l'ensemble formé par l'organe d'écartement 82 et la bielle d'entraînement 84.

En variante, l'encoche 136 est réalisée directement dans l'extrémité 166 de la bielle d'entraînement 84 ou dans l'organe d'écartement 82, par exemple dans l'arbre 86 ou encore le disque 102.

Avantageusement, l'encoche 136 présente un profil en « V » complémentaire du doigt de verrouillage 130 formé par la bague, le profil de l'encoche 136 comportant une face verticale arrière 174 et une face verticale avant 176 avec lesquelles coopèrent une partie du doigt de verrouillage 130 lorsque, les moyens de verrouillage 92 étant en position verrouillée, le doigt pénètre dans l'encoche 136.

En variante illustrée à la figure 7B, le levier 170 comporte une encoche 136 formant un cran complémentaire du doigt de verrouillage 130 et qui étant disposée à son extrémité libre 172 qui est opposée à l'extrémité 168, s'étend radialement à partir de la bielle d'entraînement 84 dont elle est solidaire. L'encoche 136 ne présente pas un profil en « V » avec des faces 174, 176 mais une face 175.

Lorsque, les moyens de verrouillage 92 sont en position verrouillée, le doigt de verrouillage 130 coopère avec la surface délimitée par les faces 174, 176, respectivement 175, de l'encoche 136.

De préférence, le levier 170 comporte une surface de guidage 178 qui est adjacente à la face verticale avant 176 de l'encoche 136 et contre laquelle le doigt de verrouillage 130 est en appui lorsque les moyens de verrouillage 92 sont en position escamotée.

Le doigt de verrouillage 130 comporte une surface annulaire externe 180 qui est ici en contact permanent avec la surface constituée par les faces 174, 176 ou la surface de guidage 178 selon la position occupée par les moyens de verrouillage 92, c'est-à-dire la position verrouillée ou la position escamotée.

On a représenté aux figures 8 et 9 une pince 54 avec l'ensemble du mécanisme 80 assemblé qui illustrent respectivement la position verrouillée correspondant à la position ouverte de la pince 54 et la position escamotée correspondant à la position fermée de la pince 54.

Pour procéder à la fermeture de la pince 54, il faut déplacer les moyens de verrouillage 92 de .la position verrouillée à la position escamotée afin de libérer l'ensemble formé par la bielle d'entraînement 84 et l'organe d'écartement 82 qui est dès lors susceptible d'être déplacé de la position active à la position passive sous l'action de l'effort de rappel élastique exercé par les moyens de rappel élastique 60 sur les leviers 54a, 54b et donc sur l'écarteur 100 via les galets 108a, 108b.

Pour ce faire, le galet formant l'élément de commande 138 est sollicité transversalement vers l'arrière par les premiers moyens d'actionnement 90 de manière que l'effort transversal F de fermeture appliqué, de l'avant vers l'arrière, sur ce galet provoque le pivotement du bras de support 140 dans le sens horaire autour de l'axe B et à l'encontre du ressort constituant les seconds moyens de rappel élastique 132 et provoque donc le déplacement du doigt de verrouillage 130, solidaire du galet et du bras de support 140, hors de l'encoche 136.

Lors de ce déplacement pour la fermeture de la pince 54, la surface annulaire externe 180 du doigt de verrouillage 130 va parcourir la face verticale arrière 174 de l'encoche 136 jusqu'à sortir de l'encoche 136 pour venir simultanément en contact avec la face verticale avant 176.

Pour procéder à l'ouverture ou réouverture de la pince 54, le galet constituant l'élément de commande 160 de l'ouverture de la pince 54 est sollicité par les premiers moyens d'actionnement 90 de manière que l'effort appliqué sur ce galet provoque le pivotement de la bielle d'entraînement 84 autour de l'axe C dans le sens anti-horaire, c'est dire encore le déplacement de l'organe d'écartement 82, à l'encontre des moyens de rappel élastique 60 des leviers, de la position passive vers la position active.

Simultanément, le levier 170 comportant l'encoche 136 étant solidaire en déplacement de la bielle d'entraînement 84, le doigt de verrouillage 130 parcourt, de l'avant vers l'arrière, la surface de guidage 178 formant rampe jusqu'à ce que le doigt de verrouillage 130 bascule dans l'encoche 136 en position verrouillée : ce basculement se produit lorsque la position active est atteinte simultanément par la bielle d'entraînement 84 et l'organe d'écartement 82, et a pour conséquence la mise en position ouverte de la pince 54.

Le dispositif de transfert 50 selon l'invention est plus particulièrement destiné à équiper, tel qu'illustrée à la figure 1, une installation 10 de type linéaire pour la fabrication de récipients 12 à partir de préformes 14, l'installation 10 comportant principalement l'unité de conditionnement thermique 34 et l'unité de moulage 38.

Avantageusement, le premier dispositif de transfert 50 de l'installation 10 comporte un groupe de modules 182 apte à transférer simultanément un groupe de préformes 14 depuis une zone de chargement 184 située à la sortie du four 36 de l'unité de conditionnement thermique 34 jusqu'au moule 40 de l'unité de moulage 38.

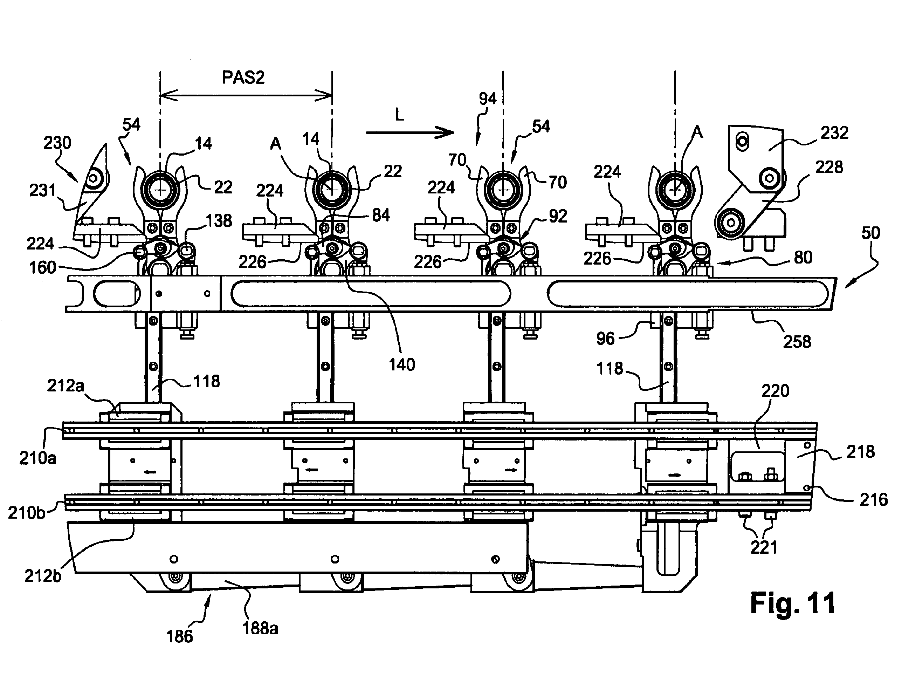

On a représenté aux figures 10 et 11, un exemple de réalisation d'un dispositif de transfert 50 comportant un groupe de quatre modules 182 apte à transférer simultanément un groupe de quatre préformes 14.

Selon l'invention, chaque module 182 du premier dispositif de transfert 50 des préformes 14 comporte une pince 54 dont l'ouverture et la fermeture sont commandées sélectivement par l'intermédiaire d'un mécanisme 80, décrit précédemment, grâce auquel on assure le transfert de chaque préforme 14 en la maintenant dans une position angulaire déterminée depuis son chargement jusqu'à son déchargement dans le moule 40.

De préférence, au moins les modules 182 du premier dispositif de transfert 50 des préformes sont reliés entre eux par l'intermédiaire de moyens de liaison 186 aptes à faire varier l'écartement longitudinal séparant deux modules 182 successifs, entre le premier écartement, dit PAS1, correspondant à une configuration contractée des modules illustrée par la figure 10 et le deuxième écartement, dit PAS2, correspondant à une configuration déployée des modules illustrée par la figure 11.

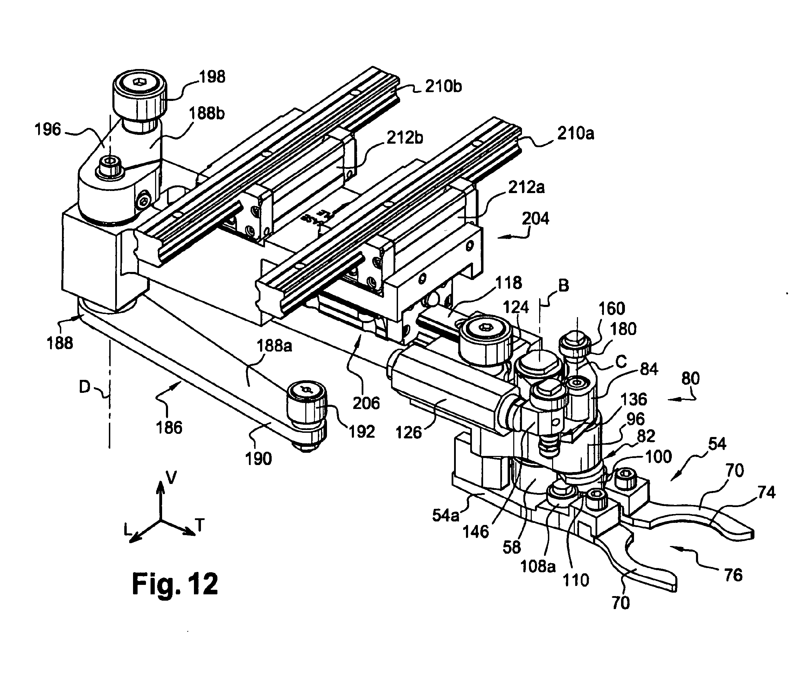

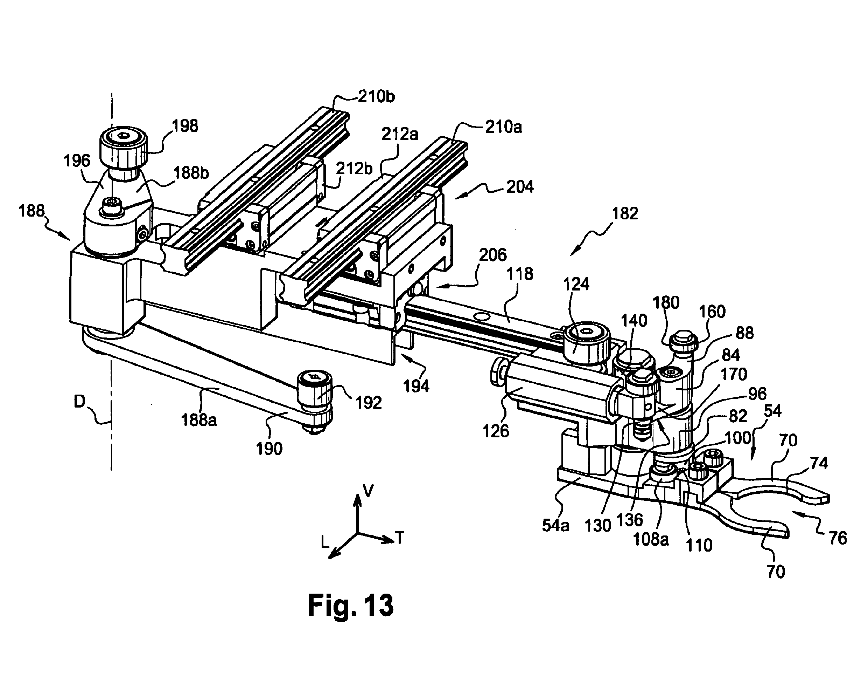

On a représenté en détail aux figures 12 et 13 un module 182 du dispositif de transfert 50 des préformes 14 comportant un exemple de réalisation préféré des moyens de liaison 186 destinés à permettre la variation de l'écartement PAS1 à l'écartement PAS2 et réciproquement.

De tels moyens de liaison 186 sont avantageusement similaires à ceux décrits dans le document FR-A1-2.879.179 déposé au nom de la demanderesse et auquel on se reportera pour une description détaillée des moyens de liaison 186 et de leur fonctionnement.

Les moyens de liaison 186 comportent un levier 188 monté en rotation sur l'un des modules 182 autour d'un axe D, vertical, sensiblement perpendiculaire à la direction longitudinale L de déplacement, ce levier 188 comporte deux parties respectivement une bielle gauche 188a et une bielle droite 188b qui s'étendent de part et d'autre de l'axe D.

La bielle gauche 188a du levier est munie à une extrémité libre 190 d'un premier doigt 192, par exemple un galet, apte à circuler dans une rainure 194 ménagée transversalement sur l'autre des modules 182.

La bielle droite 188b du levier est munie à une extrémité libre 196 d'un second doigt 198, par exemple un second galet, et l'installation 10 comporte une structure porteuse 200 comportant une gorge 202, agencée longitudinalement, dans laquelle circule le second doigt 198.

La gorge 202 comporte un tronçon aval 202A et un tronçon amont 202C qui, sensiblement parallèles à la direction longitudinale L de déplacement, sont reliés entre eux par un tronçon intermédiaire 202B, courbe et sensiblement oblique, formant un angle α variable par rapport à la direction longitudinale L de déplacement.

L'installation 10 comporte au moins des premiers moyens de transmission 204 aptes à déplacer selon la direction longitudinale le premier dispositif de transfert 50 des préformes et des seconds moyens de transmission 206 aptes à déplacer selon une direction transversale, orthogonale à la direction longitudinale L de déplacement dans l'installation linéaire, les pinces 54 des modules 182 du premier dispositif de transfert 50 des préformes de manière à procéder au chargement ou au déchargement des préformes 14.

Comme illustré aux figures 10 à 13, les premiers moyens de transmission 204 comportent de préférence deux rails, respectivement avant 210a et arrière 210b, qui s'étendent longitudinalement, parallèlement à la direction longitudinale L de déplacement, et qui sont solidaires de la structure porteuse 200 de l'installation 10, chaque module 182 du dispositif de transfert 50 des préformes 14 comportant deux coulisseaux 212a, 212b par l'intermédiaire desquels les modules 182 sont accrochés aux rails 210a, 210b.

Avantageusement, les premiers moyens de transmission 204 comportent des moyens d'entraînement associés (non représentés) tels qu'une courroie couplée à un moteur et fixée à au moins l'un des modules 182, par exemple par l'intermédiaire d'une bride, de manière à entraîner en déplacement le groupe de modules 182 du dispositif de transfert 50 des préformes 14 selon la direction longitudinale L.

De préférence, les seconds moyens de transmission 206 comportent au moins un actionneur, tel qu'un moteur électrique, apte à commander sélectivement, selon la direction transversale, le déplacement du rail 118 solidaire de la platine 96 de chaque module 182, de sorte que le rail 118 coulisse de manière télescopique entre une position extrême arrière illustrée à la figure 12 et une position extrême avant illustrée à la figure 13, le déplacement du rail 118 provoquant l'avancée ou le recul de la pince 54 et du mécanisme 80 par rapport à la structure porteuse 200 et aux premiers moyens de transmission 204.

En variante, les seconds moyens de transmission 206 comportent au moins un actionneur constitué par tous moyens appropriés, par exemple un vérin pneumatique ou hydraulique, etc.

L'installation 10 comporte, en aval du premier, le second dispositif de transfert 50' qui comporte un mécanisme 80' similaire au mécanisme 80 décrit précédemment mais qui est destiné à transférer vers l'aval les récipients 12, ici simultanément le groupe de quatre récipients 12 fabriqués par l'unité de moulage 38 et qui comporte un groupe de quatre modules 182'.

Par convention, les éléments du dispositif de transfert 50' similaires au dispositif de transfert 50 sont désignés par les mêmes références auxquelles le signe prime (') a été ajouté.

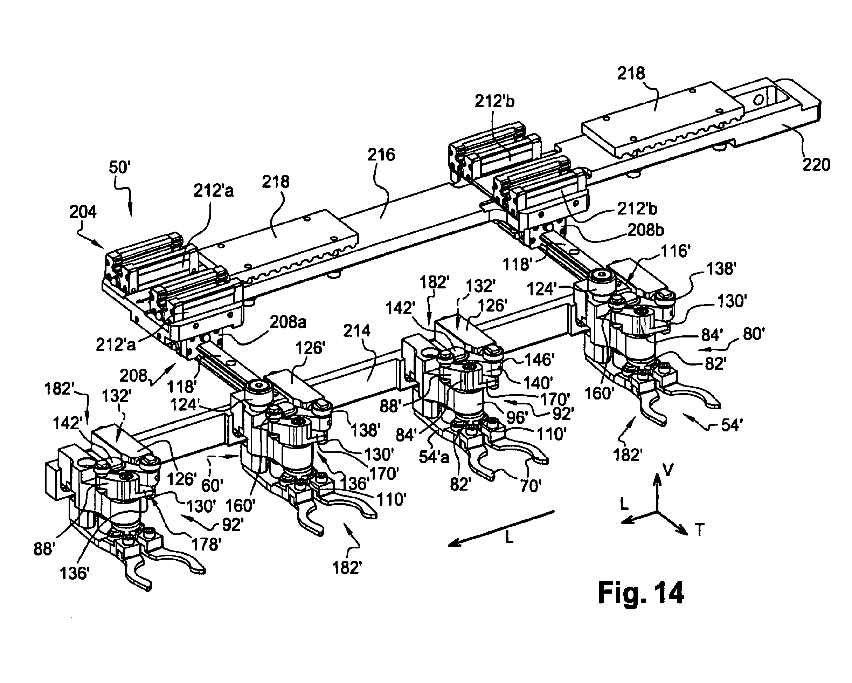

Comme illustré par la figure 14, le mécanisme 80' du dispositif de transfert 50' des bouteilles 12 ne diffère du mécanisme 80 qu'en ce que l'agencement des composants est inversé par rapport à un plan vertical d'orientation transversale.

A titre d'exemple, dans le mécanisme 80 l'élément de commande 138 de la fermeture est à gauche ou du côté aval et l'élément de commande 160 de l'ouverture est à droite ou du côté amont alors que dans le cas du mécanisme 80' l'élément de commande 138' de la fermeture est à droite ou du côté amont et l'élément de commande 160' de l'ouverture est à gauche ou du côté aval suivant la direction longitudinale L de déplacement.

L'ensemble des composants du mécanisme 80' étant en tous points semblable à ceux du mécanisme 80 et son fonctionnement analogue, ils ne seront pas décrits plus en détails.

La structure porteuse 200 de l'installation 10 comporte des moyens de transmission aptes à déplacer le second dispositif de transfert 50' des récipients 12 selon la direction longitudinale L.

Avantageusement, lesdits moyens de transmission du second dispositif de transfert 50' sont constitués par les premiers moyens de transmission 204 du premier dispositif de transfert 50 des préformes.

Grâce à la mutualisation des moyens de transmission 204, le dispositif de transfert 50 des préformes 14 et le dispositif de transfert 50' des récipients 12 sont susceptibles de travailler de manière parfaitement synchrone lors des déplacements selon la direction longitudinale L.

De plus, la mutualisation permet encore d'une manière générale de réduire les coûts de fabrication de l'installation 10 et d'en simplifier le fonctionnement et les opérations de maintenance.

De préférence, la structure porteuse 200 de l'installation 10 comporte des seconds moyens de transmission 208 aptes à déplacer selon une direction transversale, orthogonale à la direction longitudinale L de déplacement, les pinces 54' des modules 182' du second dispositif de transfert 50' des récipients 12 de manière à procéder au chargement ou au déchargement des récipients.

Avantageusement, les quatre modules 182' formant le dispositif de transfert 50' sont solidaires d'un premier support longitudinal 214, tel qu'une barre de support, qui est fixé sur la partie arrière des platines 96' de chaque module 182'. Les modules 182' sont écartés entre eux d'une distance longitudinale fixe correspondant à l'écartement PAS2, c'est-à-dire l'écartement longitudinal entre les axes A de deux récipients 12 successifs.

En effet, pour le second dispositif de transfert 50', il n'est pas nécessaire de prévoir de moyens de liaison 186 qui permettaient de faire varier l'écartement entre les modules comme pour le premier dispositif de transfert 50.

Comme illustré à la figure 14, le dispositif de transfert 50' comporte deux paires de deux coulisseaux 212'a, 212'b aptes coopérer avec les rails 210a, 210b de la structure porteuse 200 et qui sont respectivement associés au premier et au troisième modules 182'.

Les coulisseaux 212'a et 212'b sont solidaires de la face horizontale supérieure d'une seconde barre longitudinale 216 arrière de support et sur la face horizontale inférieure de laquelle sont fixés les seconds moyens de transmission 208 du dispositif de transfert 50'.

Les seconds moyens de transmission 208 comportent au moins deux actionneurs 208a, 208b aptes à commander le déploiement télescopique des deux rails 118' associés aux premier et troisième modules 182'.

Avantageusement, les quatre modules 182' étant notamment solidaires du support longitudinal 214, les moyens de transmission 204 et 208 sont réduits et associés ici au premier et au troisième modules 182' sans qu'il soit nécessaire de prévoir des moyens pour chacun des modules comme cela était le cas pour les modules 182 du dispositif de transfert 50.

La barre longitudinale 216 arrière de support comporte sur sa face horizontale supérieure des brides 218 pour la fixation d'une courroie (non représentée) avantageusement apte à être entraînée par un moteur.

La barre longitudinale 216 arrière de support comporte une extrémité libre amont 220 destinée à être reliée au dispositif de transfert 50 des préformes 14, notamment au quatrième module 182 situé le plus en aval, par exemple par des boulons 221.

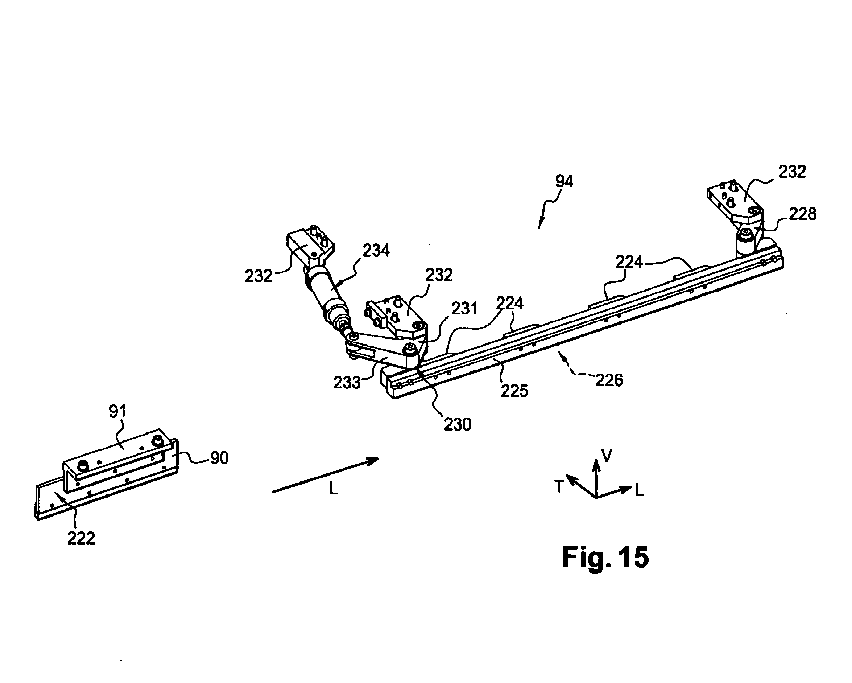

On a représenté en détail à la figure 15, les premiers et seconds moyens d'actionnement 90 et 94 destinés à commander sélectivement l'ouverture et la fermeture des pinces 54 et 54' des dispositifs de transfert 50 et 50'.

De préférence, les moyens d'actionnement 90, 94 équipant l'installation 10 sont montés solidaires de la structure porteuse 200 et ne sont donc pas embarqués avec les parties mobiles longitudinalement et transversalement de chacun des dispositifs de transfert 50, 50'.

Avantageusement, les premiers moyens d'actionnement 90 sont destinés à être agencés au niveau de la zone de chargement 184 en sortie du four 36 de manière à coopérer simultanément avec l'élément de commande 138 de fermeture de chaque pince 54 pour commander sélectivement la fermeture des mors 70 de la pince lorsque les mors 70 se trouvent dans une position déterminée autour du col 22 de chaque préforme 14 à transférer.

De préférence, les premiers moyens d'actionnement 90 sont montés solidaires de la structure porteuse 200 par l'intermédiaire d'un support 91 et sont constitués par une barre longitudinale comportant une face verticale d'actionnement 222.

Avantageusement, les seconds moyens d'actionnement 94 sont agencés longitudinalement au niveau de l'unité de moulage 38 de manière à coopérer avec l'élément de commande 160 d'ouverture de chaque pince 54 pour commander sélectivement l'ouverture de chaque pince du premier dispositif de transfert 50, lorsque les préformes 14 sont immobilisées dans le moule 40 sans pouvoir quitter la position angulaire de référence.

De préférence, les seconds moyens d'actionnement 94 agencés au niveau de l'unité de moulage 38 sont aussi aptes à coopérer avec l'élément de commande 138' de la fermeture de chaque pince 54' du second dispositif de transfert 50', de manière à commander sélectivement la fermeture de chaque pince 54' autour du col du récipient 12 fabriqué destiné à être transféré vers l'unité 52 en aval, par exemple vers une unité de remplissage.

Avantageusement, les seconds moyens d'actionnement 94 sont montés mobiles entre une première position d'actionnement et une deuxième position d'actionnement, de manière à coopérer sélectivement avec l'élément de commande 138' de la fermeture de chaque pince du second dispositif de transfert 50' des récipients 12 dans la première position et avec l'élément de commande 160 de l'ouverture de chaque pince 54 du premier dispositif de transfert 50 des préformes 14 dans la deuxième position.

De préférence, les seconds moyens d'actionnement 94 sont constitués par des organes 224, ici au nombre de quatre comme les modules, reliés entre eux par une barre 225 longitudinale d'accrochage.

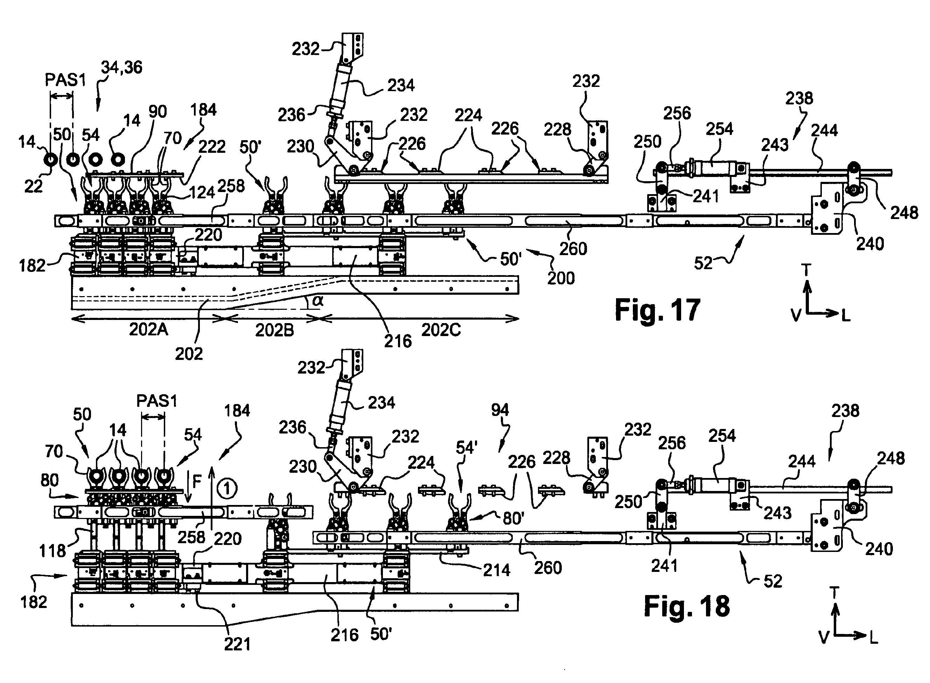

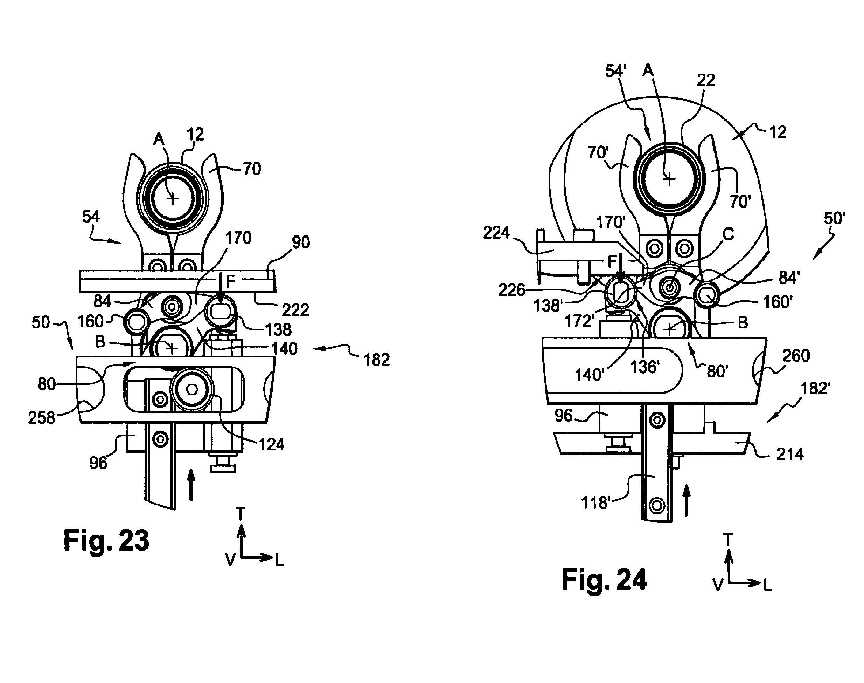

Les quatre organes 224 sont montés sur la barre 225 avec un écartement déterminé entre deux organes 224 consécutifs et chaque organe 224 comporte une face verticale 226 de commande (voir figures 17 et 23) qui s'étend en dessous de la barre 225 dans un plan horizontal distinct.

La barre 225 portant les organes 224 est montée articulée à chacune de ses extrémités longitudinales par l'intermédiaire d'une première bielle 228 et d'une deuxième bielle 230 agencées respectivement aux extrémités aval et amont de la barre 225.

La première bielle 228 comporte une extrémité qui est montée pivotante autour d'un axe vertical sur l'extrémité aval de la barre 225 et dont l'autre extrémité est montée pivotante sur une partie de moyens de support 232 qui, solidaires de la structure porteuse 200 de l'installation 10, sont destinés à permettre le montage des seconds moyens d'actionnement 94.

La deuxième bielle 230 présente une forme en "L" et comporte une biellette 231 qui est montée comme la première bielle 228. La biellette 231 comporte une extrémité qui est montée pivotante autour d'un axe vertical sur l'extrémité amont de la barre 225 et dont l'autre extrémité est montée pivotante sur une autre partie des moyens de support 232.

La deuxième bielle 230 comporte une autre biellette 233, formant l'autre barre du "L", dont une extrémité est solidaire, comme la biellette 231, de l'extrémité amont de la barre 225 et dont l'autre extrémité libre est apte à coopérer avec des moyens d'actionnement, tels qu'au moins un actionneur 234.

L'actionneur 234 est par exemple constitué par un vérin pneumatique, en variante hydraulique, comportant une tige 236 d'actionnement dont l'extrémité libre est montée articulée sur l'extrémité libre de la biellette 233 de la seconde bielle 230.

L'actionneur 234 est piloté de manière à déplacer sélectivement la tige 236 du vérin entre une position rentrée et une position sortie dans laquelle la tige 236 s'étend hors du corps du cylindre du vérin.

Le déplacement de la tige 236, depuis sa position rentrée vers sa position sortie, provoque le déplacement de la deuxième bielle 230 autour de son axe, ce qui provoque le déplacement de l'ensemble formé par la première bielle 228 et la barre 225 d'accrochage portant les organes 224, de même que le déplacement de la première position d'actionnement vers la deuxième position d'actionnement correspondant à un mouvement de translation vers l'aval selon la direction longitudinale L.

Dans la première position d'actionnement des seconds moyens 94, chaque organe 224 est destiné à coopérer par l'intermédiaire de sa face verticale 226 de commande avec l'élément de commande 138' de fermeture de chaque pince 54' du second dispositif de transfert 50' des récipients 12, tandis que dans la deuxième position, chaque organe 224 est destiné à coopérer par l'intermédiaire de sa face verticale 226 de commande avec l'élément de commande 160 d'ouverture de chaque pince 54 du premier dispositif de transfert 50 des préformes 14.

Selon une variante non représentée, l'actionneur 234 est un moteur électrique apte à solliciter la seconde bielle 230 pour provoquer un déplacement en translation selon la direction longitudinale de la barre 225 et des organes 224.

Avantageusement, l'utilisation d'un actionneur 234 de type moteur électrique permet notamment de supprimer les risques de fuites inhérents à l'utilisation d'un fluide pneumatique ou hydraulique.

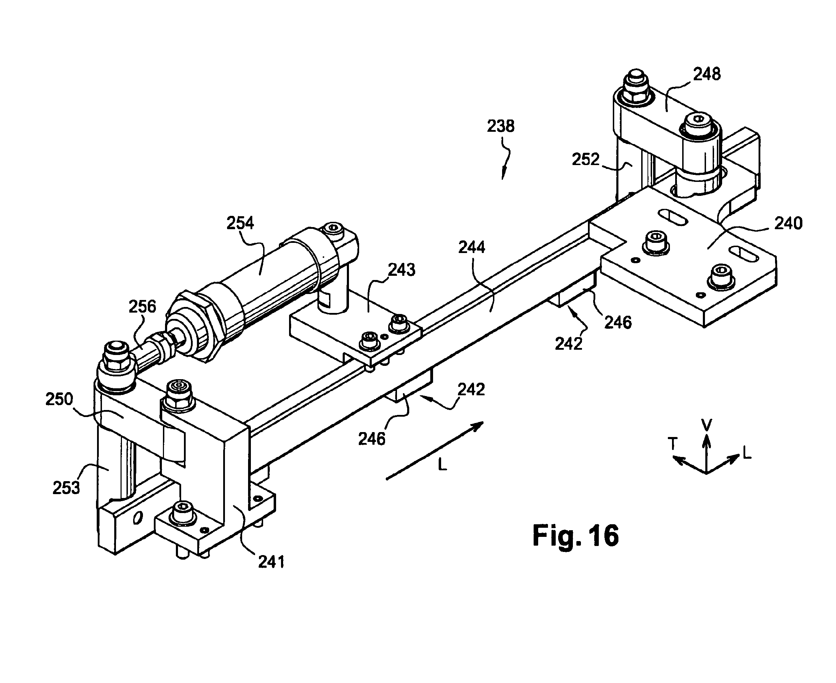

L'installation 10 comporte des troisièmes moyens d'actionnement 238 représentés à la figure 16 qui sont agencés longitudinalement au niveau de l'unité 52 et sont montés solidaires de la structure porteuse 200 par l'intermédiaire d'éléments de support 240, 241.

Les troisièmes moyens d'actionnement 238 sont aptes à coopérer avec le dispositif de transfert 50' des récipients 12, notamment pour commander sélectivement l'ouverture des pinces 54' afin de libérer les cols 22 des récipients 12 fabriqués en provenance du moule 40.

De préférence, les troisièmes moyens d'actionnement 238 comportent des organes d'actionnement 242, au nombre de quatre comme les modules 182', qui sont reliés par une barre 244 d'accrochage qui s'étend longitudinalement parallèlement à la direction L de déplacement.

Chaque organe d'actionnement 242 comporte une face verticale d'actionnement 246 apte à coopérer avec un élément de commande 160' de l'ouverture de la pince 54'.

La barre 244 est montée mobile par l'intermédiaire d'une première biellette 248 et d'une deuxième biellette 250 qui sont respectivement d'orientation sensiblement transversale.

La première biellette 248 est montée pivotante à une extrémité sur un élément de support 240, autour d'un axe vertical, et est reliée à son autre extrémité par un élément vertical de liaison 252 à la partie aval de la barre 244.

La deuxième biellette 250 est montée pivotante à une extrémité sur un autre élément de support 241, autour d'un axe vertical, et est reliée à son autre extrémité par un élément vertical de liaison 253 à la partie amont de la barre 244.

La barre 244 portant les organes d'actionnement 242 est ainsi montée articulée par rapport aux éléments de support 240, 241 solidaires de la structure porteuse 200 et est susceptible de se déplacer en translation selon la direction longitudinale L entre une première position et une deuxième position, dite d'actionnement correspondant à la commande d'ouverture des pinces 54'.

Les troisièmes moyens d'actionnement 238 comportent au moins un actionneur 254 qui est monté solidaire d'un élément de support 243. Cet actionneur 254 est par exemple constitué par un vérin pneumatique comportant une tige d'actionnement 256 susceptible d'être commandée en déplacement entre une position rentrée et une position sortie.

L'extrémité libre de la tige d'actionnement 256 est apte à coopérer avec l'extrémité de la deuxième biellette 250 pour provoquer, par l'intermédiaire de l'élément de liaison 253, lorsque la tige est déplacée depuis sa position rentrée jusqu'à sa position sortie, le déplacement de la barre 244 portant les organes d'actionnement 242.

Plus précisément, le déplacement de la tige d'actionnement 256 vers sa position sortie provoque le déplacement de la barre 244 et des organes d'actionnement 242 depuis la première position vers la deuxième position, dite d'actionnement, dans laquelle chaque face verticale d'actionnement 246 d'un organe d'actionnement 242 vient coopérer avec l'élément de commande 160' de l'ouverture de la pince 54' de chaque modules 182' du dispositif de transfert 50' afin de décharger les récipients 12 fabriqués.

On a représenté partiellement à la figure 17 et suivantes, les dispositifs de transfert 50 et 50' équipant une installation 10.

On précisera encore que, comme illustré sur la figure 10 ou 17-18, chaque suiveur de came 124 d'un module 182 est reçu dans un rail comportant un chemin de came 258 complémentaire qui s'étend de manière rectiligne selon la direction longitudinale L de déplacement mais qui est susceptible de se déplacer transversalement avec les moyens de transfert 50 des préformes 14.

De manière analogue, chaque suiveur de came 124' d'un module 182' est reçu dans un rail comportant un chemin de came 260 complémentaire qui s'étend de manière rectiligne selon la direction longitudinale L de déplacement mais qui est susceptible de se déplacer transversalement avec les moyens de transfert 50' des récipients 12.

Le fonctionnement des moyens d'actionnement 90, 94 et 238 destinés à coopérer avec les mécanismes 80, 80' équipant les pinces 54, 54' des dispositifs de transfert 50, 50' sera mieux compris dans la description qui va suivre d'un cycle de transfert au sein de l'installation 10.

La figure 17 représente l'installation linéaire dans l'état initial correspondant au début de cycle de transfert dont on décrira ci-après la première étape, dite de chargement des préformes, par comparaison des figures 17 et 18.

Un groupe de quatre préformes 14 est tout d'abord amené depuis l'amont hors du four 36 de l'unité de conditionnement thermique 34 jusqu'à la zone de chargement 184 située en aval, en vue d'y être chargé par le dispositif de transfert 50.

Dans la zone de chargement 184, les préformes 14 sont alignées selon la direction longitudinale L de déplacement, espacées longitudinalement entre elles d'un écartement PAS1 déterminé ici par l'écartement entre les tournettes 44 et se trouvent chacune dans la position angulaire de référence déterminée par l'opération de chauffe préférentielle réalisée dans le four 36.

Le dispositif de transfert 50 est initialement positionné longitudinalement en vis-à-vis de la zone de chargement 184 dans l'attente de l'arrivée d'un tel groupe de préformes 14, la position de chaque module 182 étant déterminée de manière à être en coïncidence avec la préforme 14 qui lui est associée dans la zone de chargement 184.

Lorsque les préformes 14 sont en position d'être chargées dans la zone de chargement 184, on commande alors les seconds moyens de transmission 206, constitués de préférence par des actionneurs du type moteur électrique, de manière à déplacer transversalement et simultanément chacun des modules 182 du dispositif de transfert 50 vers l'avant, le déplacement transversal vers l'avant des pinces étant avantageusement synchronisé avec le déplacement des préformes selon la direction longitudinale.

En effet, les préformes se déplacent de manière continue dans le four 36 de sorte que les paramètres de commande du déplacement du dispositif de transfert 50 sont déterminées en fonction des paramètres de fonctionnement (vitesse, etc....) du four.

Au cours de cette première étape, les premiers moyens de transmission 204 sont immobiles de manière que, les coulisseaux 212a, 212b de chaque module 182 restent dans la position initiale par rapport aux rails 210a, 210b.

Chaque actionneur constitutif des seconds moyens de transmission 206 est commandé de manière à provoquer le déplacement vers l'avant du rail 118 de chaque module 182 à l'extrémité duquel sont montés la pince 54 et son mécanisme 80 de commande d'ouverture et de fermeture.

Chaque rail 118 se déploie télescopiquement depuis sa position extrême arrière représentée à la figure 17 jusqu'à atteindre la position extrême avant représentée à la figure 18.

On rappellera que chaque pince 54 est initialement maintenue en position ouverte par les moyens de verrouillage 92 à l'encontre des moyens de rappel élastique 60 des leviers.

Cependant lors de l'avancée des pinces 54 vers la zone de chargement 184, chaque élément de commande 138 de fermeture va venir en fin de course au contact de la face verticale d'actionnement 222 formant des premiers moyens d'actionnement 90 comme cela est illustré par la figure 23.

Il résulte du contact entre chaque élément de commande 138 et la face verticale d'actionnement 222 des premiers moyens d'actionnement 90 qu'un effort F globalement transversal, dit effort de fermeture, est appliqué par action-réaction sur l'élément de commande 138.

Cet effort F de fermeture provoque le recul de l'élément de commande 138 et par conséquent le déplacement du bras de support 140 qui porte le doigt de verrouillage 130, lequel pivote alors dans le sens horaire autour de l'axe vertical B.

L'effort F appliqué par les premiers moyens d'actionnement 90 sur les éléments de commande 138 de chaque module 182 provoque donc le déplacement des moyens de verrouillage 92, à l'encontre des moyens de rappel élastique 132, depuis la position verrouillée jusqu'à la position escamotée.

Lorsque la position escamotée est atteinte, le doigt de verrouillage 130 se trouve hors de l'encoche 136 et l'ensemble formé par l'organe d'écartement 82 et la bielle d'entraînement 84, sollicité par les moyens de rappel élastique 60, se déplace vers sa position passive qui est atteinte lorsque l'écarteur 100 est en butée contre le pion constituant les moyens de butée 110.

Bien entendu, les premiers moyens d'actionnement 90 sont positionnés de manière que les pinces 54 initialement en position ouverte s'engagent chacune autour des cols 22 des préformes 14 avant que la sollicitation des éléments de commande 138 de fermeture par la face verticale d'actionnement 222 des premiers moyens 90 ne provoque la fermeture automatique par déverrouillage.

Grâce à la commande sélective du déverrouillage des moyens de verrouillage 92, on commande automatiquement la fermeture des mors 70 de chaque pince 54 autour du col 22 de la préforme 14, sans que la position angulaire de référence de la préforme 14 n'ait pu être modifiée lors de cette opération de chargement et en ayant l'assurance par l'effort de serrage exercé par les mors 70 sur le col que cette position de référence sera conservée pendant le transfert vers l'unité de moulage 38.

Pendant cette première étape du cycle de transfert illustrée aux figures 17 et 18, le dispositif de transfert 50' des récipients 12 est immobile, le moule 40 étant normalement fermé et une opération de moulage par soufflage du groupe de quatre préformes 14 étant en cours, lequel groupe de quatre préformes 14 aura été précédemment transféré par le dispositif de transfert 50 selon une deuxième étape du cycle de transfert qui va maintenant être décrite.

De préférence, l'installation 10 de fabrication de récipients est du type comportant une unité de moulage 38 dans laquelle la préforme 14, préalablement injectée, est chauffée dans le four 36 puis moulée par soufflage ou par étirage-soufflage en une opération de manière à obtenir directement un récipient 12 final mis en forme.

En variante, le récipient 12 final peut être obtenu selon un procédé de fabrication comportant plusieurs étapes, distinctes, de soufflage ou d'étirage-soufflage de manière à transformer la préforme 14 en au moins un récipient intermédiaire (non représenté) avant l'obtention du récipient final.

Un tel procédé de fabrication est par exemple décrit dans les documents EP-A-0.442.836 ou US-A-5.229.042 auxquels on se reportera pour de plus amples détails.

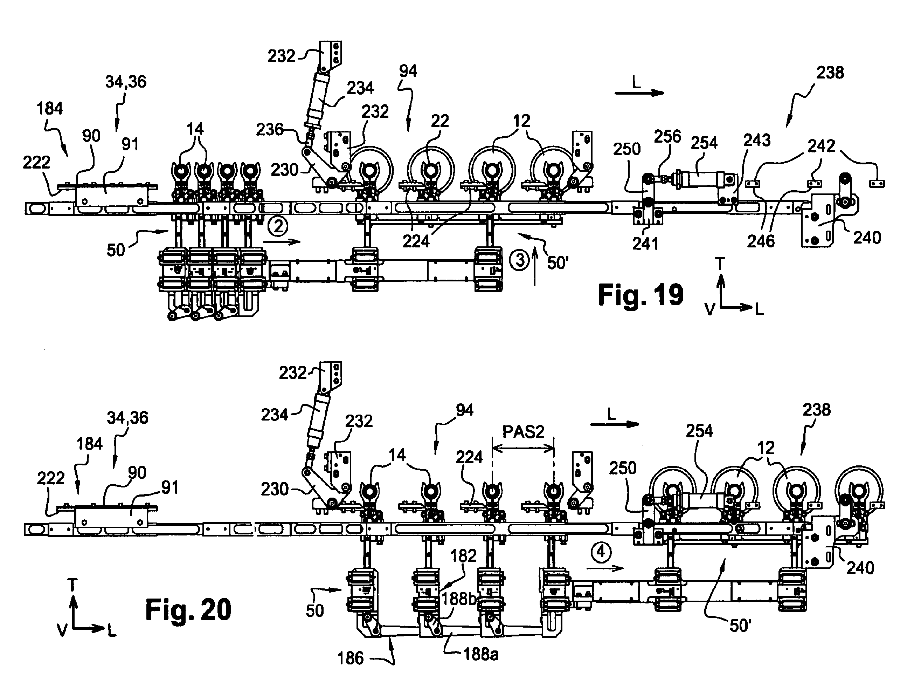

On décrira maintenant la deuxième étape du cycle de transfert par comparaison entre les figures 18 et 19.

Lors de la deuxième étape, on commande les premiers moyens de transmission 204 de manière à déplacer, selon la direction longitudinale L de déplacement, le dispositif de transfert 50 des préformes 14 et le dispositif de transfert 50' des récipients par l'intermédiaire de moyens d'entraînement commun (non représentés), tels qu'une courroie entraînée par un moteur.

Comme on peut le voir sur la figure 19, le dispositif de transfert 50 est déplacé vers l'aval libérant la zone de chargement 184 pour l'amenée du groupe de préformes suivant et le dispositif de transfert 50' est déplacé pour être positionné longitudinalement en coïncidence avec le moule 40 (non représenté) de l'unité de moulage 38 de manière que les pinces 54' des modules 182' soient alignées transversalement avec les cols 22 des récipients 12 qu'elles sont destinées à transférer vers l'aval à l'unité 52.

Lorsque le dispositif de transfert 50' est positionné longitudinalement, on commande alors les actionneurs 208a, 208b formant les seconds moyens de transmission 208 pour déployer transversalement vers l'avant les rails 118' qui sont déplacés de manière télescopique depuis la position arrière de repos représentée à la figure 17 ou 18 jusqu'à atteindre la position avant de saisie représentée à la figure 19.

Lorsque la position avant de saisie est atteinte, les rails comportant les chemins de came 258 et 260 dans lesquels roulent les suiveurs de came 124 et 124' sont alignés longitudinalement formant un chemin de roulement rectiligne.

Lors du déplacement vers la position avant de saisie, les mors 70' des pinces du dispositif de transfert 50' vont venir se positionner autour des cols 22 des récipients 12, par exemple ici des bouteilles, qui viennent d'être moulés par soufflage et l'élément de commande 138' de fermeture de chaque module 182' va, parallèlement à l'engagement de chaque pince 54' autour du col 22, venir coopérer avec la face verticale 226 de commande de l'organe 224 d'actionhement des seconds moyens d'actionnement 94 comme cela est illustré en détail par la figure 24.

L'organe 224 d'actionnement sollicite alors l'élément de commande 138' avec un effort transversal F orienté vers l'arrière qui provoque simultanément le recul de l'élément de commande 138' et le pivotement autour de l'axe B, dans le sens anti-horaire, du bras de support 140' dont l'élément de commande 138' est solidaire et qui porte aussi le doigt de verrouillage 130'.

Le processus est analogue à celui qui a été décrit précédemment pour la fermeture des pinces 54 autour des cols 22 des préformes 14, l'effort F appliqué provoque le déverrouillage des moyens de verrouillage 92 en déplaçant le doigt de verrouillage 130' hors de l'encoche 136', c'est-à-dire vers la position escamotée.

Le déverrouillage opéré libère l'ensemble formé par l'organe d'écartement 82' et la bielle d'entraînement 84' qui, sollicités par les moyens de rappel élastique 60' (tels un ressort) des leviers 54'a, 54'b, se ferme alors automatiquement autour des cols 22 des récipients 12.

Bien entendu, l'opération de fermeture des pinces 54' du dispositif de transfert 50' autour des cols des récipients 12 est synchronisée de manière adéquate avec le relevage vertical des moyens de soufflage (non représentés) et l'ouverture du moule 40.

Comme illustré à la figure 19, les quatre récipients 12 sont alors chargés par leurs cols 22 respectifs dans les pinces 54' et sont aptes à être transférés vers l'aval.

Bien entendu, l'écart transversal entre l'extrémité avant des deux mors 70, 70' de chaque pince 54, 54' est avantageusement supérieur au diamètre des cols 22 des préformes 14 ou des récipients 12 de manière que les pinces 54, 54' en position ouverte puissent s'engager transversalement sans contact autour des cols 22 et que les cols 22 soient positionnés globalement au centre de l'ouverture 76, 76' lorsque la fermeture des mors de chaque pince 54, 54' est déclenchée.

Selon une troisième étape du cycle, on commande les premiers moyens de transmission 204 pour déplacer longitudinalement suivant la direction L, d'une part le dispositif de transfert 50' de l'unité de moulage 38 vers l'unité 52 située en aval et, d'autre part, le dispositif de transfert 50 vers l'unité de moulage 38.

Les déplacements des deux dispositifs de transfert 50, 50' sont simultanés et parfaitement synchrones du fait que la barre longitudinale 216 de support du dispositif de transfert 50' est relié par son extrémité libre amont 220 au module 182 adjacent du dispositif de transfert 50 et du fait de l'utilisation de moyens communs d'entraînement (courroie, moteur non représentés).

Le dispositif de transfert 50 est déplacé longitudinalement de la position intermédiaire qu'il occupait à la figure 19 à la position qu'il occupe à la figure 20, position dans laquelle les préformes 14 sont aptes à être déchargées dans le moule 40 en vue de leur moulage par soufflage pour obtenir les récipients 12.

Lors de ce déplacement longitudinal, l'écartement entre les modules 182 du dispositif de transfert 50 est modifié pour atteindre la valeur du deuxième écartement PAS2 grâce aux moyens de liaison 186 décrits précédemment.

En effet, les modules 182 du dispositif de transfert 50 sont automatiquement passés, lors du transfert vers l'aval, de leur configuration contractée initiale (figure 10), correspondant au premier écartement PAS1 à la configuration déployée finale (figure 11) correspondant au deuxième écartement PAS2.

De la même manière, la position occupée par le dispositif de transfert 50' sur la figure 20 au niveau de l'unité 52 correspond à la position dans laquelle les récipients 12 sont destinés à être déchargés pour procéder à leur remplissage ou à leur évacuation.

La quatrième étape du cycle consiste principalement à commander sélectivement d'une part l'ouverture des pinces 54 du dispositif de transfert 50 pour décharger les préformes 14 et, d'autre part, l'ouverture des pinces 54' du dispositif de transfert 50' pour procéder au déchargement des récipients 12.

A l'unité de moulage 38, les deux demi-moules 46a, 46b du moule 40 sont déplacés en translation vers la position fermée dans laquelle le corps 16 de chaque préforme 14 s'étend verticalement à l'intérieur d'un volume délimité par la réunion des demi-empreintes 48 complémentaires.

Avantageusement, l'opération de déchargement des préformes 14 par ouverture des pinces 54 est effectuée lorsque chaque préforme 14 est immobilisée par des moyens tels que le moule 40 et/ou une partie des moyens de soufflage associés (non représentés) de manière que, lors de l'ouverture des pinces 54, la position angulaire de référence de chaque préforme 14 transférée ne puisse être modifiée.

Pour procéder au déchargement des préformes 14, on commande l'actionneur 234 des seconds moyens d'actionnement 94 de manière à provoquer le déplacement vers l'aval de la barre 225 portant les organes 224 suivant un mouvement de translation selon la direction longitudinale L, comme cela a été décrit précédemment pour la figure 15.

Les organes 224 des seconds moyens d'actionnement 94 se déplacent de la première position d'actionnement dans laquelle chaque organe 224 coopère par l'intermédiaire de sa face verticale 226 de commande avec l'élément de commande 138' de fermeture de chaque pince 54' du second dispositif de transfert 50' des récipients 12 vers la deuxième position d'actionnement dans laquelle chaque organe 224 coopère par l'intermédiaire de sa face verticale 226 de commande avec l'élément de commande 160 d'ouverture de chaque pince 54 du premier dispositif de transfert 50 des préformes 14.

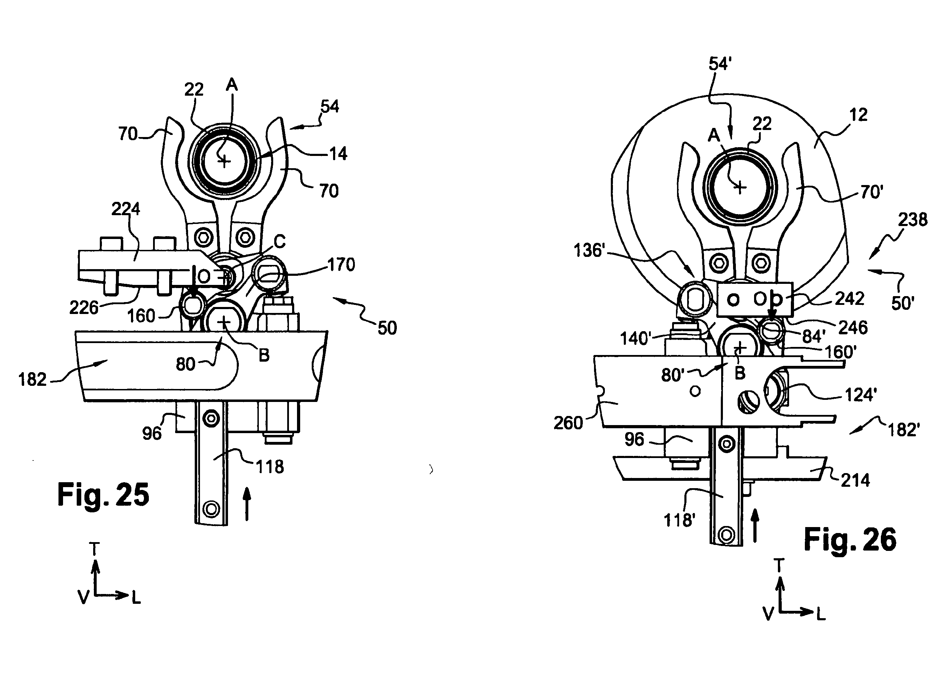

Lorsque les seconds moyens d'actionnement 94 atteignent ladite deuxième position d'actionnement, les organes 224 coopèrent par l'intermédiaire de leur face verticale 226 de commande respective avec l'élément de commande 160 d'ouverture de chaque pince 54 du premier dispositif de transfert 50 des préformes 14 comme cela est illustré par la figure 25.

Chaque organe 224 sollicite alors l'élément de commande 160 d'ouverture avec un effort d'ouverture O qui provoque le pivotement de la bielle d'entraînement 84 autour de l'axe vertical C, entraînant en rotation l'organe d'écartement 82 et, en conséquence, l'écarteur 100 de la position passive vers la position active qui correspond à la position ouverte de la pince 54.

Lors de ce pivotement, le levier 170 est entraîné avec l'ensemble formé par l'organe d'écartement 82 et la bielle d'entraînement 84, de sorte que le doigt de verrouillage 130 des moyens de verrouillage 92, initialement en position escamotée, parcourt la surface de guidage 178 jusqu'à pénétrer dans l'encoche 136 correspondant à la position de verrouillage dans laquelle le doigt de verrouillage 130 maintient la pince 54 en position ouverte à l'encontre des moyens de rappel élastique 60, tels qu'un ressort, des leviers 54a, 54b.

L'opération de déchargement des récipients 12 est obtenue de manière similaire en commandant l'actionneur 254 des troisièmes moyens d'actionnement 238 représentés à la figure 16 et décrits précédemment.

L'actionneur 254 est commandé pour provoquer le déplacement de la tige d'actionnement 256 vers sa position sortie, ce qui provoque le déplacement de la barre 244 et des organes d'actionnement 242 depuis la première position vers la deuxième position, dite d'actionnement, c'est-à-dire selon un mouvement de translation de sens opposé par rapport la direction longitudinale L.

Lors du déplacement de la barre 244 vers la deuxième position d'actionnement, la face verticale d'actionnement 246 de chaque organe d'actionnement 242 coopère avec l'élément de commande 160' de l'ouverture de la pince 54' de chaque module 182' du dispositif de transfert 50' sur lequel chaque organe d'actionnement 242 exerce un effort O apte à déclencher sélectivement l'ouverture des pinces 54' permettant de décharger les récipients 12 fabriqués comme illustré à la figure 26.

En effet, l'effort O appliqué sur l'élément de commande 160' d'ouverture provoque le pivotement, dans le sens horaire et autour de l'axe vertical C, de la bielle d'entraînement 84', de l'organe d'écartement 82' et de l'écarteur 100' vers la position active, et du levier 170' portant l'encoche 136'.

Simultanément au déplacement de l'ensemble formé par l'organe d'écartement 82' et la bielle d'entraînement 84' vers la position active, le doigt de verrouillage 130' parcourt la surface de guidage 178' du levier 170 jusqu'à pénétrer dans l'encoche 136' en position de verrouillage, l'ensemble bielle d'entraînement 82'-organe d'écartement 84' étant alors immobilisé en position active, à l'encontre des moyens de rappel élastique 60', laquelle position correspond à la position d'ouverture de la pince 54' du dispositif de transfert 50'.

Grâce au mécanisme de commande d'ouverture et de fermeture sélective des mors des pinces 54, 54' autour des cols 22 des préformes 14 ou des récipients 12, on obtient un récipient 12 final dont le col 22 est exempt de toutes marques et qui présente un aspect esthétique irréprochable.

Selon une cinquième étape, on commande d'une part, pour le premier dispositif de transfert 50 des préformes 14, les seconds moyens de transmission 206 de manière à replier transversalement vers l'arrière les pinces 54 de chaque module 182 en déplaçant les rails 118 de leur position avant à leur position arrière et, d'autre part, pour le second dispositif de transfert 50' des récipients 12, les actionneurs 208a, 208b constitutifs des seconds moyens de transmission 208, de manière à replier transversalement vers l'arrière les pinces 54' de chaque module 182' en déplaçant les rails 118' de leur position avant à leur position arrière.

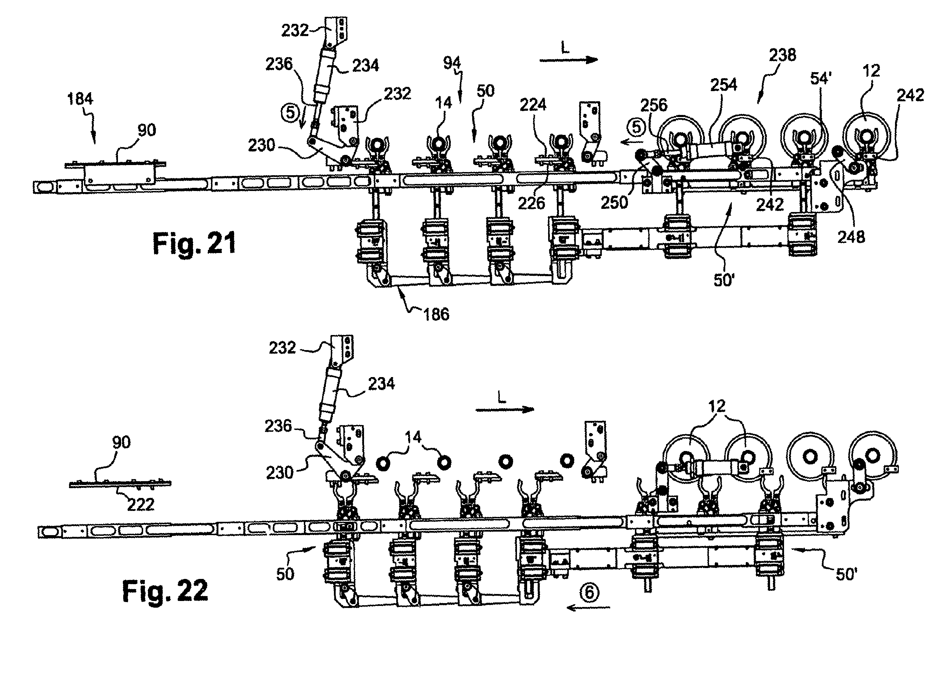

Selon une sixième étape représentée à la figure 22, on commande les premiers moyens de transmission 204 pour déplacer longitudinalement, en sens opposé de la direction L, les dispositifs de transfert 50 et 50' afin de les ramener vers la position initiale que chaque dispositif 50, 50' occupait en début de cycle et qui est représentée à la figure 17.

Lors de ce déplacement de retour du dispositif de transfert 50, les moyens de liaison 186 associés aux modules 182 vont provoquer le changement inverse de configuration lors du passage du tronçon intermédiaire 202B de la gorge 202, les modules 182 passant alors de la configuration déployée qu'ils occupaient à la configuration contractée correspondant au premier écartement PAS1.

Les dispositifs de transfert 50, 50' sont alors susceptibles d'effectuer un nouveau cycle identique à celui qui vient d'être décrit.

Avantageusement, l'installation 10 comporte des moyens de commande (non représentés) pour commander ou piloter notamment les moyens d'actionnement 90, 94, 238 et les moyens de transmission 204, 206, respectivement 204, 208, de mouvement afin de réaliser automatiquement et de manière répétée le cycle de transfert suivant un procédé de commande correspondant en particulier aux étapes qui viennent d'être décrites.

Bien entendu, le mode de réalisation préféré du dispositif de transfert 50 qui vient d'être décrit n'est nullement limitatif et de nombreuses variantes pourraient être envisagées sans sortir du cadre de l'invention, en particulier pour les moyens de verrouillage 92.

En variante, les moyens de verrouillage 92 sont par exemple réalisés avec un doigt de verrouillage monté mobile en translation et non en rotation autour de l'axe B.

De même, le verrouillage de type mécanique par coopération de formes entre un doigt et une encoche complémentaire peut être remplacé par d'autres moyens équivalents, tels que deux aimants l'un fixe, l'autre mobile qui serait solidaire de l'ensemble formé par l'organe d'écartement 82 et la bielle d'entraînement 84.

La présente invention est destinée à être mise en oeuvre dans une installation linéaire pour la fabrication de récipients à partir de préformes en matière thermoplastique, en particulier mais non exclusivement, une installation comportant une unité de conditionnement thermique équipée d'un four à chauffe préférentielle dans laquelle le dispositif de transfert permet notamment de garantir le maintien de chaque préforme dans ladite position de référence déterminée.

Toutefois, les dispositifs de transfert selon l'invention permettant encore de résoudre le problème de marques, etc. laissées sur les cols par les pinces de l'état de la technique et garantissent ainsi un haut degré de qualité dans la fabrication des récipients dont l'aspect esthétique est dès lors exempt de tels défauts.

C'est la raison pour laquelle, les dispositifs de transfert des préformes et des récipients selon l'invention sont avantageusement susceptibles d'être mis en oeuvre dans une installation linéaire de fabrication de récipients, indépendamment de la présence ou de l'absence dans l'installation d'un four de traitement thermique des préformes de type à "chauffe préférentielle".

## Revendications

1. Dispositif de transfert (50, 50') d'une préforme (14), ou d'un récipient (12), comportant au moins une pince (54, 54') qui est constituée par deux leviers (54a, 54b, 54'a, 54'b) horizontaux montés articulés autour d'un axe vertical (B) entre une position ouverte et une position fermée de la pince (54, 54') et qui comporte des moyens de rappel élastique (60, 60') des leviers (54a, 54b, 54'a, 54'b) vers la position fermée,
**caractérisé en ce que** le dispositif de transfert (50, 50') comporte un mécanisme (80, 80') pour commander sélectivement l'ouverture et la fermeture de la pince (54, 54'), ce mécanisme (80, 80') comportant :
- un organe d'écartement (82, 82') des leviers (54a, 54b, 54'a, 54'b) destiné à être entraîné par une bielle d'entraînement (84, 84') qui est montée pivotante autour d'un arbre (C, 56),
- la bielle d'entraînement (84, 84') de l'organe d'écartement (82, 82') comportant au moins une extrémité libre (88, 88') qui est apte à coopérer avec des premiers moyens d'actionnement (90) destinés à provoquer l'ouverture de la pince (54, 54') à l'encontre de premiers moyens de rappel élastique (60, 60') des leviers (54a, 54b, 54'a, 54'b), et
- des moyens de verrouillage (92) associés qui sont montés mobiles entre une position verrouillée dans laquelle la pince (54, 54') est maintenue en position ouverte et une position escamotée dans laquelle la pince (54, 54') est libre de se fermer,
- les moyens de verrouillage (92, 92') étant aptes à coopérer avec des seconds moyens d'actionnement (94) destinés à provoquer le déplacement des moyens de verrouillage (92), de la position verrouillée vers la position escamotée, de manière à déclencher automatiquement la fermeture de la pince (54, 54').

2. Dispositif de transfert (50, 50') selon la revendication 1, **caractérisé en ce que** l'organe d'écartement (82, 82') est solidaire en rotation de la bielle d'entraînement (84, 84') de manière que l'ensemble formé par l'organe d'écartement et la bielle d'entraînement est susceptible de pivoter autour de l'arbre vertical (C, 56) entre :
- une position active, correspondant à la position verrouillée des moyens de verrouillage (92, 92'), dans laquelle l'organe d'écartement (82, 82') est maintenu pour solliciter, à l'encontre des premiers moyens de rappel élastique (60, 60'), les leviers (54a, 54b, 54'a, 54'b) dans la position d'ouverture de la pince, et
- une position passive, correspondant à la position escamotée des moyens de verrouillage (92, 92'), dans laquelle l'organe d'écartement (82, 82') libéré, qui est sollicité par les premiers moyens de rappel élastique (60, 60'), coopère avec des moyens de butée (110, 110') qui déterminent la position de fermeture de la pince (54, 54').

3. Dispositif de transfert (50, 50') selon l'une des revendications 1 ou 2, **caractérisé en ce que** les moyens de verrouillage (92, 92') comportent un doigt de verrouillage (130, 130') qui est monté mobile entre la position escamotée et la position verrouillée dans laquelle le doigt de verrouillage (130, 130'), qui est sollicité par des seconds moyens de rappel élastique (132, 132'), coopère avec une encoche (136, 136') complémentaire pour immobiliser l'ensemble formé par l'organe d'écartement (82, 82') et la bielle d'entraînement (84, 84') à l'encontre des premiers moyens de rappel élastique (60, 60').

4. Dispositif de transfert (50, 50') selon la revendication 3, **caractérisé en ce que** les moyens de verrouillage (92, 92') comportent un élément de commande (138, 138') de la fermeture de la pince (54, 54') qui, apte à coopérer sélectivement avec les premiers moyens d'actionnement (90), est susceptible de provoquer le déverrouillage en déplaçant, à l'encontre des seconds moyens de rappel élastique (132, 132'), le doigt de verrouillage (130, 130') de la position verrouillée à la position escamotée de manière que, libérant l'ensemble formé par l'organe d'écartement (82, 82') et la bielle d'entraînement (84, 84'), les premiers moyens de rappel élastique (60, 60') des leviers (54a, 54b, 54'a, 54'b) provoquent la fermeture automatique de la pince.

5. Dispositif de transfert (50, 50') selon la revendication 4, **caractérisé en ce que** l'élément de commande de fermeture (138, 138') et le doigt de verrouillage (130, 130') sont montés solidaires de l'extrémité libre (146, 146') d'un bras de support (140, 140') qui est monté pivotant à son autre extrémité (142, 142') autour d'un axe vertical, le bras de support (140, 140') étant sollicité par les seconds moyens de rappel élastique (132, 132') des moyens de verrouillage (92, 92').

6. Dispositif de transfert (50, 50') selon l'une quelconque des revendications précédentes, **caractérisé en ce que** la bielle d'entraînement (84, 84') de l'organe d'écartement (82, 82') comporte à son extrémité libre (88, 88') un élément de commande (160, 160') de l'ouverture de la pince (54, 54') qui, apte à coopérer sélectivement avec les seconds moyens (94) d'actionnement, est susceptible de provoquer le déplacement de l'organe d'écartement (82, 82') de la position passive vers la position active correspondant à la position ouverte de la pince (54, 54').

7. Dispositif de transfert (50, 50') selon l'une quelconque des revendications 3 à 6, **caractérisé en ce que** le mécanisme (80, 80') comporte un levier (170, 170') comportant une extrémité qui est reliée à la bielle d'entraînement (84, 84') et dont l'autre extrémité libre (172, 172') comporte l'encoche (136, 136') complémentaire du doigt de verrouillage (130, 130').

8. Dispositif de transfert (50, 50') selon la revendication 7, **caractérisé en ce que** le levier (170, 170') comporte une surface de guidage (178, 178'), adjacente à l'encoche (136, 136'), contre laquelle le doigt de verrouillage (130, 130') est en appui en position escamotée, **en ce que** le doigt de verrouillage (130, 130') parcourt la surface de guidage (178, 178') formant rampe lorsque le levier (170, 170') est entraîné par la bielle d'entraînement (84, 84') que déplace vers la position active les premiers moyens d'actionnement (90) coopérant avec l'élément de commande (160, 160') d'ouverture de la pince (54, 54'), et **en ce que**, lorsque la bielle d'entraînement (84, 84') atteint la position active correspondant à la position ouverte de la pince, le doigt de verrouillage (130, 130') bascule simultanément en position verrouillée en pénétrant dans l'encoche (136, 136').

9. Installation (10) linéaire pour la fabrication de récipients (12) à partir de préformes (14) en matière thermoplastique, comportant successivement, d'amont en aval, suivant une direction longitudinale (L) de déplacement au moins :
- une unité de conditionnement thermique (34) comportant des moyens de chauffage, tels qu'un four (36) à chauffe préférentielle, destiné à chauffer les préformes (14) jusqu'à une température déterminée,
- une unité de moulage (38) comportant au moins un moule (40) pour transformer par soufflage ou par étirage-soufflage au moins une préforme (14) en récipient (12), et au moins
- un dispositif de transfert (50, 50') selon l'une quelconque des revendications précédentes qui est destiné à transférer une préforme (14), ou un groupe de préformes, de l'unité de conditionnement thermique (34) jusqu'à l'unité de moulage (38).

10. Installation (10) selon la revendication 9, **caractérisée en ce que** l'installation (10) comporte un premier dispositif de transfert (50) comportant au moins un module (182) apte à transférer simultanément au moins une préforme (14) depuis une zone de chargement (184) située à la sortie de l'unité de conditionnement thermique (34) jusqu'à l'unité de moulage (38).

11. Installation (10) selon la revendication 10, **caractérisée en ce que** au moins les modules (182) du premier dispositif de transfert (50) des préformes (14) sont reliés entre eux par l'intermédiaire de moyens de liaison (186) aptes à faire varier l'écartement longitudinal séparant deux pinces (54) successives, entre un premier écartement, dit (PAS1), correspondant à une configuration contractée des modules (182) et un deuxième écartement, dit (PAS2), correspondant à une configuration déployée des modules (182).

12. Installation (10) selon l'une des revendications 10 ou 11, **caractérisée en ce que** chaque module (182) du premier dispositif de transfert (50) des préformes (14) comporte une pince (54) dont l'ouverture et la fermeture est commandée sélectivement par l'intermédiaire du mécanisme (80) de manière à assurer notamment le transfert de la préforme (14) en la maintenant dans une position angulaire déterminée depuis son chargement jusqu'à son déchargement dans le moule (40) de l'unité de moulage (38).

13. Installation (10) selon la revendication 12, **caractérisée en ce que** les premiers moyens d'actionnement (90) sont agencés au niveau de la zone de chargement (184) en sortie de l'unité de conditionnement thermique (34) de manière à coopérer avec l'élément de commande (138) de fermeture de chaque pince (54) pour commander sélectivement la fermeture de chaque pince autour du col (22) de chaque préforme (14) à transférer.

14. Installation (10) selon l'une quelconque des revendications précédentes, **caractérisée en ce que** les seconds moyens d'actionnement (94) sont agencés au niveau de l'unité de moulage (38) de manière à coopérer avec l'élément de commande (160) d'ouverture de chaque pince (54) pour commander sélectivement l'ouverture de chaque pince (54) lorsque les préformes (14) sont immobilisées dans la position angulaire déterminée au moins par le moule (40).

15. Installation (10) selon l'une quelconque des revendications 10 à 14, **caractérisée en ce que** l'installation (10) comporte, en aval du premier (50), un second dispositif de transfert (50') comportant un mécanisme (80') similaire qui est apte à transférer vers l'aval au moins un récipient (12) fabriqué par l'unité de moulage par l'intermédiaire d'au moins un module (182').

16. Installation (10) selon la revendication 15, **caractérisée en ce que** les seconds moyens d'actionnement (94) agencés au niveau de l'unité de moulage (38) sont aptes à coopérer avec l'élément de commande (138') de fermeture de chaque pince (54') du second dispositif de transfert (50') de manière à commander sélectivement la fermeture de chaque pince (54') autour du col (22) du récipient (12) fabriqué destiné à être transféré vers l'aval.

17. Installation (10) selon la revendication 16, **caractérisée en ce que** les seconds moyens d'actionnement (94) sont montés mobiles entre une première position d'actionnement et une deuxième position d'actionnement de manière à coopérer sélectivement avec l'élément de commande (138') de fermeture de chaque pince (54') du second dispositif de transfert (50') des récipients (12) dans la première position et avec l'élément de commande (160) d'ouverture de chaque pince (54) du premier dispositif de transfert (50) des préformes (14) dans la deuxième position.

18. Installation (10) selon l'une quelconque des revendications 10 à 15, **caractérisée en ce que** l'installation (10) comporte au moins des premiers moyens de transmission (204) aptes à déplacer selon la direction longitudinale (L) le premier dispositif de transfert (50) des préformes (14) et/ou le second dispositif de transfert (50') des récipients (12) et des seconds moyens de transmission (206 ; 208) aptes à déplacer selon une direction transversale, orthogonale à la direction longitudinale (L) de déplacement, les pinces (54, 54') des modules (182) du premier dispositif de transfert (50) des préformes (14) et/ou du second dispositif de transfert (50') des récipients (12) respectivement, de manière à procéder au chargement ou au déchargement des préformes (14) ou des récipients (12).

19. Installation (10) selon l'une quelconque des revendications précédentes, **caractérisée en ce que** l'installation comporte des troisièmes moyens d'actionnement (238) qui, agencés en aval de l'unité de moulage (38), sont aptes à coopérer avec l'élément de commande (160') d'ouverture de chaque pince (54') pour commander sélectivement l'ouverture de chaque pince (54') du second dispositif de transfert (50') de manière à libérer les récipients (12).

## Claims

1. A transfer device (50, 50') for transferring a preform (14) or a container (12), comprising at least one gripper (54, 54') which consists of two horizontal levers (54a, 54b, 54'a, 54'b) mounted articulated about a vertical axis (B) between a position in which the gripper (54, 54') is open and a position in which it is closed, and which comprises elastic return means (60, 60') which return the levers (54a, 54b, 54'a, 54'b) toward the closed position,
**characterized in that** the transfer device (50, 50') comprises a mechanism (80, 80') for selectively instigating the opening and closing of the gripper (54, 54'), this mechanism (80, 80') comprising:
- a separating member (82, 82') for separating the levers (54a, 54b, 54'a, 54'b) which is intended to be driven by a driving link (84, 84') which is pivot-mounted about a shaft (C, 56),
- the driving link (84, 84') that drives the separating member (82, 82') comprising at least one free end (88, 88') which is able to collaborate with first actuating means (90) intended to cause the gripper (54, 54') to open against the action of first elastic return means (60, 60') that return the levers (54a, 54b, 54'a, 54'b), and
- associated locking means (92) which are mounted able to move between a locked position in which the gripper (54, 54') is kept in the open position and a retracted position in which the gripper (54, 54') is free to close,
- the locking means (92, 92') being able to collaborate with second actuating means (94) intended to cause the locking means (92) to move from the locked position into the retracted position so as automatically to trigger the closing of the gripper (54, 54').

2. The transfer device (50, 50') as claimed in claim 1, **characterized in that** the separating member (82, 82') rotates as one with the driving link (84, 84') so that the assembly formed by the separating member and the driving link is able to pivot about the vertical shaft (C, 56) between:
- an active position corresponding to the locked position of the locking means (92, 92'), in which position the separating member (82, 82') is kept in order to urge the levers (54a, 54b, 54'a, 54'b), against the action of the first elastic return means (60, 60'), into the position in which the gripper is open, and
- a passive position corresponding to the retracted position of the locking means (92, 92') and in which the released separating member (82, 82'), which is urged by the first elastic return means (60, 60'), collaborates with stop means (110, 110') which determine the closed position of the gripper (54, 54').

3. The transfer device (50, 50') as claimed in one of claims 1 and 2, **characterized in that** the locking means (92, 92') comprise a locking pawl (130, 130') which is mounted to move between the retracted position and the locked position in which the locking pawl (130, 130'), which is urged by second elastic return means (132, 132'), collaborates with a complementary notch (136, 136') to immobilize the assembly formed by the separating member (82, 82') and the driving link (84, 84') against the action of the first elastic return means (60, 60').

4. The transfer device (50, 50') as claimed in claim 3, **characterized in that** the locking means (92, 92') comprise an instigating element (138, 138') instigating closure of the gripper (54, 54') which, being able selectively to collaborate with the first actuating means (90), is able to bring about unlocking by moving the locking pawl (130, 130') against the action of the second elastic return means (132, 132'), from the locked position into the retracted position so that, by releasing the assembly formed by the separating member (82, 82') and the driving link (84, 84'), the first elastic return means (60, 60') that elastically return the levers (54a, 54b, 54'a, 54'b) cause the gripper to close automatically.

5. The transfer device (50, 50') as claimed in claim 4, **characterized in that** the closure instigating element (138, 138') and the locking pawl (130, 130') are mounted secured to the free end (146, 146') of a support arm (140, 140') which is pivot-mounted at its other end (142, 142') about a vertical axis, the support arm (140, 140') being urged by the second elastic return means (132, 132') of the locking means (92, 92').

6. The transfer device (50, 50') as claimed in any one of the preceding claims, **characterized in that** the driving link (84, 84') of the separating member (82, 82') comprises at its free end (88, 88') an instigating element (160, 160') that instigates the opening of the gripper (54, 54') and which, being able selectively to collaborate with the second actuating means (94), is able to cause the separating member (82, 82') to move from the passive position toward the active position corresponding to the open position of the gripper (54, 54').

7. The transfer device (50, 50') as claimed in any one of claims 3 to 6, **characterized in that** the mechanism (80, 80') comprises a lever (170, 170') comprising an end which is connected to the driving link (84, 84') and the free other end (172, 172') of which comprises the notch (136, 136') that complements the locking pawl (130, 130').

8. The transfer device (50, 50') as claimed in claim 7, **characterized in that** the lever (170, 170') comprises a guiding surface (178, 178') adjacent to the notch (136, 136') and against which the locking pawl (130, 130') bears in the retracted position, **in that** the locking pawl (130, 130') travels over the ramp-forming guiding surface (178, 178') when the lever (170, 170') is driven by the driving link (84, 84') that the first actuating means (90) collaborating with the instigating element (160, 160') that instigates opening of the gripper (54, 54') moves toward the active position, and **in that**, when the driving link (84, 84') reaches the active position corresponding to the open position of the gripper, the locking pawl (130, 130') simultaneously pivots into the locked position entering the notch (136, 136').

9. A linear apparatus (10) for the manufacture of containers (12) from thermoplastic preforms (14), comprising, in succession, from upstream to downstream in a longitudinal direction (L) of travel, at least:
- a thermal conditioning unit (34) comprising heating means, such as a preferential-heating oven (36), intended to heat the preforms (14) to a determined temperature,
- a molding unit (38) comprising at least one mold (40) for converting at least one preform (14) into a container (12) by blow molding or by stretch-blow molding, and at least
- one transfer device (50, 50') as claimed in any one of the preceding claims, which is intended to transfer a preform (14), or a group of preforms, from the thermal conditioning unit (34) to the molding unit (38).

10. The apparatus (10) as claimed in claim 9, **characterized in that** the apparatus (10) comprises a first transfer device (50) comprising at least one module (182) able to transfer simultaneously at least one preform (14) from a loading zone (184) situated at the exit from the thermal conditioning unit (34) as far as the molding unit (38).

11. The apparatus (10) as claimed in claim 10, **characterized in that** at least the modules (182) of the first preform (14) transfer device (50) are connected to one another via connecting means (186) able to vary the longitudinal separation that separates two successive grippers (54), between a first separation, known as (PAS1), corresponding to a contracted configuration of the modules (182) and a second separation, known as (PAS2), corresponding to a deployed configuration of the modules (182).

12. The apparatus (10) as claimed in one of claims 10 and 11, **characterized in that** each module (182) of the first preform (14) transfer device (50) comprises a gripper (54) the opening and closing of which is instigated selectively by means of the mechanism (80) so as notably to transfer the preform (14) while keeping it in a determined angular position from its loading to its unloading from the mold (40) of the molding unit (38).

13. The apparatus (10) as claimed in claim 12, **characterized in that** the first actuating means (90) are arranged at the loading zone (184) at the exit from the thermal conditioning unit (34) so as to collaborate with the instigating element (138) that instigates the closing of each gripper (54) in order selectively to instigate the closing of each gripper around the neck (22) of each preform (14) that is to be transferred.

14. The apparatus (10) as claimed in any one of the preceding claims, **characterized in that** the second actuating means (94) are arranged at the molding unit (38) so as to collaborate with the instigating element (160) that instigates the opening of each gripper (54) in order selectively to instigate the opening of each gripper (54) when the preforms (14) are immobilized in the angular position that has been determined at least by the mold (40).

15. The apparatus (10) as claimed in any one of claims 10 to 14, **characterized in that** the apparatus (10) comprises, downstream of the first (50), a second transfer device (50') comprising a similar mechanism (80') which is able to transfer in the downstream direction at least one container (12) manufactured by the molding unit via at least one module (182').

16. The apparatus (10) as claimed in claim 15, **characterized in that** the second actuating means (94) arranged at the molding unit (38) are able to collaborate with the instigating element (138') that instigates the closing of each gripper (54') of the second transfer device (50') so as selectively to instigate the closing of each gripper (54') around the neck (22) of the manufactured container (12) intended to be transferred in the downstream direction.

17. The apparatus (10) as claimed in claim 16, **characterized in that** the second actuating means (94) are mounted such that they can move between a first actuating position and a second actuating position so as selectively to collaborate with the instigating element (138') that instigates the closing of each gripper (54') of the second, container (12), transfer device (50') in the first position, and with the instigating element (160) that instigates the opening of each gripper (54) of the first, preform (14), transfer device (50) in the second position.

18. The apparatus (10) as claimed in any one of claims 10 to 15, **characterized in that** the apparatus (10) comprises at least first transmission means (204) able to move the first, preform (14), transfer device (50) and/or the second, container (12), transfer device (50') in the longitudinal direction (L), and second transmission means (206; 208) able to move the grippers (54, 54') of the modules (182) of the first, preform (14), transfer device (50) and/or of the second, container (12), transfer device (50') in a transverse direction, orthogonal to the longitudinal direction (L) of travel, so that the preforms (14) or the containers (12) can be loaded or unloaded, respectively.

19. The apparatus (10) as claimed in any one of the preceding claims, **characterized in that** the apparatus comprises third actuating means (238) which, arranged downstream of the molding unit (38), are able to collaborate with the instigating element (160') that instigates the opening of each gripper (54') in order selectively to instigate the opening of each gripper (54') of the second transfer device (50') so as to release the containers (12).

## Patentansprüche

1. Transfervorrichtung (50, 50') für eine Vorform (14) oder einen Behälter (12) mit mindestens einer Spannzange (54, 54'), die aus zwei horizontalen Hebeln (54a, 54b, 54'a, 54'b) besteht, welche um eine vertikale Achse (B) zwischen einer geöffneten Position und einer geschlossenen Position der Spannzange (54, 54') gelenkig montiert sind, und die elastische Rückholelemente (60, 60') der Hebel (54a, 54b, 54a', 54b') in die geschlossene Position aufweist,
**dadurch gekennzeichnet, dass** die Transfervorrichtung (50, 50') einen Mechanismus (80, 80') aufweist, um das Öffnen und Schließen der Spannzange (54, 54') selektiv zu steuern, wobei dieser Mechanismus (80, 80') folgendes besitzt:
- ein Abstandselement (82, 82') für die Hebel (54a, 54b, 54'a, 54'b), das von einer Treibstange (84, 84') angetrieben ist, die um eine Welle (C, 56) herum drehbar montiert ist,
- wobei die Treibstange (84, 84') des Abstandselementes (82, 82') mindestens ein freies Ende (88, 88') aufweist, das mit ersten Betätigungselementen (90) zusammenwirken kann, die das Öffnen der Spannzange (54, 54') gegen erste elastische Rückholelemente (60, 60') der Hebel (54a, 54b, 54'a, 54'b) bewirken, und
- dazugehörige Verriegelungselemente (92), die zwischen einer Verriegelten Position, in der die Spannzange (54, 54') in geöffneter Position gehalten wird, und einer eingeschobenen Position, in der sich die Spannzange (54, 54') schließen kann, beweglich montiert sind,
- wobei die Verriegelungselemente (92, 92') mit zweiten Betätigungselementen (94) zusammenwirken können, die die Verschiebung der Verriegelungselemente (92, 92') von der verriegelten Position in die eingeschobene Position bewirken sollen, so dass das Schließen der Spannzange (54, 54') automatisch ausgelöst wird.

2. Transfervorrichtung (50, 50') nach Anspruch 1, **dadurch gekennzeichnet, dass** das Abstandselement (82, 82') drehbar mit der Treibstange (84, 84') verbunden ist, so dass sich die Einheit, die aus dem Abstandselement und der Treibstange gebildet ist, um die vertikale Welle (C, 56) herum drehen kann, und zwar wischen:
- einer aktiven Position, die der Verriegelten Position der Verriegelungselemente (92, 92') entspricht, in der das Abstandselement (82, 82') gehalten wird, um die Hebel (54a, 54b, 54'a, 54'b) gegen die ersten elastischen Rückholelemente (60, 60') in die Öffnungsposition der Spannzange zu drücken, und
- einer passiven Position, die der eingeschobenen Position der Verriegelungselemente (92, 92') entspricht, in der das gelöste Abstandselement (82, 82'), das durch die ersten elastischen Rückholelemente (60, 60') gespannt wird, mit Anschlagelementen (110, 110') zusammenwirkt, die die Schließposition der Spannzange (54, 54') bestimmen.

3. Transfervorrichtung (50, 50') nach einem der Ansprüche 1 oder 2, **dadurch gekennzeichnet, dass** die Verriegelungselemente (92, 92') einen Zapfen zur Verriegelung (130, 130') besitzen, der beweglich montiert ist, und zwar zwischen der eingeschobenen Position und der Verriegelten Position, in der der Zapfen zur Verriegelung (130, 130'), der durch zweite elastische Rückholelemente (132, 132') gespannt wird, mit einer entsprechenden Vertiefung (136, 136') zusammenwirkt, um die Einheit, die durch das Abstandselement (82, 82') und die Treibstange (84, 84') gebildet ist, gegen die ersten elastischen Rückholelemente (60, 60') festzusetzen.

4. Transfervorrichtung (50, 50') nach Anspruch 3, **dadurch gekennzeichnet, dass** die Verriegelungselemente (92, 92') ein Betätigungselement (138, 138') zum Schließen der Spannzange (54, 54') besitzen, das in der Lage ist, selektiv mit den ersten Betätigungselementen (90) zusammenzuwirken, und die Entriegelung bewirken kann, indem es den Zapfen zur Verriegelung (130, 130') gegen die zweiten elastischen Rückholelemente (132, 132') verschiebt, und zwar von der verriegelten Position in die eingeschobene Position, so dass durch Lösen der Einheit, die durch das Abstandselement (82, 82') und die Treibstange (84, 84') gebildet wird, die ersten elastischen Rückholelemente (60, 60') der Hebel (54a, 54b, 54'a, 54'b) das automatische Schließen der Spannzange bewirken.

5. Transfervorrichtung (50, 50') nach Anspruch 4, **dadurch gekennzeichnet, dass** das Betätigungselement (138, 138') zum Schließen und der Zapfen zur Verriegelung (130, 130') mit dem freien Ende (146, 146') eines Tragarms (140, 140') verbunden sind, der drehbar an seinem anderen Ende (142, 142') um eine vertikale Achse herum montiert ist, wobei der Tragarm (140, 140') durch die zweiten elastischen Rückholelemente (132, 132') der Verriegelungselemente (92, 92') beansprucht wird.

6. Transfervorrichtung (50, 50') nach einem der vorhergehenden Ansprüche, **dadurch gekennzeichnet, dass** die Treibstange (84, 84') des Abstandselementes (82, 82') an ihrem freien Ende (88, 88') ein Betätigungselement (160, 160') zum Öffnen der Spannzange (54, 54') aufweist, das selektiv mit den zweiten Betätigungselementen (94) zusammenwirken kann und die Verschiebung des Abstandselementes (82, 82') aus der passiven Position in die aktive Position, die der geöffneten Position der Spannzange (54, 54') entspricht, bewirken kann.

7. Transfervorrichtung (50, 50') nach einem der Ansprüche 3 bis 6, **dadurch gekennzeichnet, dass** der Mechanismus (80, 80') einen Hebel (170, 170') mit einem Ende besitzt, das mit der Treibstange (84, 84') verbunden ist, und deren anderes freies Ende (172, 172') die entsprechende Vertiefung (136, 136') des Zapfens zur Verriegelung (130, 130') aufweist.

8. Transfervorrichtung (50, 50') nach Anspruch 7, **dadurch gekennzeichnet, dass** der Hebel (170, 170') eine Führungsfläche (178, 178') besitzt, die an die Vertiefung (136, 136') angrenzt, und gegen die sich der Zapfen zur Verriegelung (130, 130') in der eingeschobenen Position abstützt, dass der Zapfen zur Verriegelung (130, 130') über die eine Rampe bildende Führungsfläche (178, 178') läuft, wenn der Hebel (170, 170') durch die Treibstange (84, 84') angetrieben wird, die die ersten Betätigungselemente (90), die mit dem Betätigungselement (160, 160') zum Öffnen der Spannzange (54, 54') zusammenwirken, in die aktive Position verschiebt, und dass der Zapfen zur Verriegelung (130, 130'), wenn die Treibstange (84, 84') die aktive Position erreicht, die der geöffneten Position der Spannzange entspricht, gleichzeitig in die Verriegelte Position kippt, indem er in die Vertiefung (136, 136') eindringt.

9. Lineares Gerät (10) zur Herstellung von Behältern (12) aus Vorformen (14) aus thermoplastischem Material, die nacheinander von oben nach unten in einer Längsrichtung der Verschiebung (L) mindestens folgendes aufweisen:
- eine Vorrichtung der thermischen Aufbereitung (34), die Heizeinrichtungen, wie einen Ofen (36) mit bevorzugter Heizung, mit dem die Vorformen (14) bis zu einer festgelegten Temperatur erhitzt werden, besitzt,
- eine Abformeinheit (38) mit mindestens einer Form (40) zum Umwandeln mindestens einer Vorform (14) in einen Behälter (12) durch Blasformen oder Streckblasen, und mindestens
- eine Transfervorrichtung (50, 50') nach einem der vorhergehenden Ansprüche, mit der eine Vorform (14) oder eine Gruppe von Vorformen (14) von der Vorrichtung der thermischen Aufbereitung (34) bis zu der Abformeinheit (38) überführt werden soll.

10. Gerät (10) nach Anspruch 9, **dadurch gekennzeichnet, dass** das Gerät (10) eine erste Transfervorrichtung (50) besitzt, die mindestens ein Modul (182) aufweist, mit dem gleichzeitig mindestens eine Vorform (14) von einer Ladezone bzw. Beschickungszone (184), die sich am Ausgang der Vorrichtung der thermischen Aufbereitung (34) befindet, bis zu der Abformeinheit (38) transportiert werden kann.

11. Gerät (10) nach Anspruch 10, **dadurch gekennzeichnet, dass** mindestens die Module (182) der ersten Transfervorrichtung (50) der Vorformen (14) mit Hilfe von Verbindungselementen (186) miteinander verbunden sind, die den Längsabstand, der die beiden aufeinander folgenden Spannzangen (54, 54') trennt, verändern können, und zwar zwischen einem ersten Abstand, dem sogenannten (PAS1), der einer zusammengezogenen Konfiguration der Module (182) entspricht, und einem zweiten Abstand, dem sogenannten (PAS2), der einer ausgefahrenen Konfiguration der Module (182) entspricht.

12. Gerät (10) nach einem der Ansprüche 10 oder 11, **dadurch gekennzeichnet, dass** jedes Modul (182) der ersten Transfervorrichtung (50) der Vorformen (14) eine Spannzange (54) besitzt, deren Öffnungsvorgang und Schließvorgang mit Hilfe des Mechanismus (80) selektiv gesteuert wird, um insbesondere den Transfer der Vorform (14) zu gewährleisten, indem sie von ihrer Zuführung bis zu ihrem Ausstoß in der Form (40) der Abformeinheit (38) in einer bestimmten Winkelposition gehalten wird.

13. Gerät (10) nach Anspruch 12, **dadurch gekennzeichnet, dass** die ersten Betätigungselemente (90) im Bereich der Ladezone bzw. Beschickungszone (184) am Ausgang der Vorrichtung der thermischen Aufbereitung (34) angeordnet sind, so dass sie mit dem Betätigungselement (138) zum Schließen jeder Spannzange (54) zusammenwirken, um das Schließen jeder Spannzange (54) um den Hals (22) jeder zu transportierenden Vorform (14) selektiv zu steuern.

14. Gerät (10) nach einem der vorhergehenden Ansprüche, **dadurch gekennzeichnet, dass** die zweiten Betätigungselemente (94) im Bereich der Abformeinheit (38) angeordnet sind, so dass sie mit dem Betätigungselement (160) zum Öffnen jeder Spannzange (54) zusammenwirken, um das Öffnen jeder Spannzange (54) selektiv zu steuern, wenn die Vorformen (14) zumindest durch die von der Form (40) festgelegten Winkelposition verriegelt sind.

15. Gerät (10) nach einem der Ansprüche 10 bis 14, **dadurch gekennzeichnet, dass** das Gerät (10) der ersten Transfervorrichtung (50) nachgeordnet eine zweite Transfervorrichtung (50') besitzt, welche einen ähnlichen Mechanismus (80') aufweist, der mindestens einen Behälter (12) nach unten transportieren kann, der mit Hilfe mindestens eines Moduls (182') von der Abformeinheit hergestellt worden ist.

16. Gerät (10) nach Anspruch 15, **dadurch gekennzeichnet, dass** die zweiten Betätigungselemente (94), die im Bereich der Abformeinheit (38) angeordnet sind, mit dem Betätigungselement (138') zum Schließen jeder Spannzange (54') der zweiten Transfervorrichtung (50') zusammenwirken können, um das Schließen jeder Spannzange (54') um den Hals (22) des hergestellten Behälters (12), der nach unten transportiert werden soll, selektiv zu steuern.

17. Gerät (10) nach Anspruch 16, **dadurch gekennzeichnet, dass** die zweiten Betätigungselemente (94) zwischen einer ersten Betätigungsposition und einer zweiten Betätigungsposition beweglich montiert sind, um mit dem Betätigungselement (138') zum Schließen jeder Spannzange (54') der zweiten Transfervorrichtung (50') der Behälter (12) in der ersten Position und mit dem Betätigungselement (160) zum Öffnen jeder Spannzange (54) der ersten Transfervorrichtung (50) der Vorformen (14) in der zweiten Position selektiv zusammenzuwirken.

18. Gerät (10) nach einem der Ansprüche 10 bis 15, **dadurch gekennzeichnet, dass** das Gerät (10) mindestens erste Übertragungselemente (204) besitzt, die die erste Transfervorrichtung (50) der Vorformen (14) und/oder die zweite Transfervorrichtung (50') der Behälter (12) in die Längsrichtung (L) verschieben können, und zweite Übertragungselemente (206; 208) besitzt, die die Spannzangen (54 , 54') der Module (182) der ersten Transfervorrichtung (50) der Vorformen (14) und/oder der zweiten Transfervorrichtung (50') der Behälter (12) in Querrichtung, orthogonal zu der Längsrichtung (L) der Verschiebung, verschieben können, um das Beladen bzw. Beschicken oder Entladen bzw. Ausstoßen der Vorformen (14) oder der Behälter (12) durchzuführen.

19. Gerät (10) nach einem der vorhergehenden Ansprüche, **dadurch gekennzeichnet, dass** das Gerät dritte Betätigungselemente (238) aufweist, die der Abformeinheit (38) nachgeordnet angeordnet sind, und mit dem Betätigungselement (160') zum Öffnen jeder Spannzange (54') zusammenwirken können, um das Öffnen jeder Spannzange (54') der zweiten Transfervorrichtung (50') selektiv zu steuern, so dass die Behälter (12) freigesetzt werden.
